(19) Europäisches Patentamt / European Patent Office / Office européen des brevets

(11) **EP 3 853 047 B1**

(12) **EUROPEAN PATENT SPECIFICATION**

(45) Date of publication and mention
of the grant of the patent:
**06.11.2024 Bulletin 2024/45**

(21) Application number: **19780487.5**

(22) Date of filing: **19.09.2019**

(51) International Patent Classification (IPC):
***G05D 1/00*** *(2024.01)*

(52) Cooperative Patent Classification (CPC):
**B60W 30/18036; A01B 69/001; A01B 69/003;
A01B 69/004; B60D 1/06; B60D 1/36; B60D 1/62;
B60W 50/14; B62D 15/0285; G05D 1/2297;
G05D 1/243; G05D 1/661;** B60W 2050/146;
B60W 2300/152; B60W 2420/403;          (Cont.)

(86) International application number:
**PCT/US2019/052002**

(87) International publication number:
**WO 2020/061362 (26.03.2020 Gazette 2020/13)**

(54) **AUTONOMOUS FARM EQUIPMENT HITCHING TO A TRACTOR**

AUTONOMES ANHÄNGEN EINES LANDWIRTSCHAFTLICHEN GERÄTS AN EINEN TRAKTOR

ATTELAGE AUTONOME D'ÉQUIPEMENT AGRICOLE À UN TRACTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2018 US 201862733458 P
18.09.2019 US 201916575096**

(43) Date of publication of application:
**28.07.2021 Bulletin 2021/30**

(73) Proprietor: **Continental Autonomous Mobility US,
LLC
Auburn Hills, Michigan 48326 (US)**

(72) Inventors:
• **CARPENTER, Kyle P.
Auburn Hills, Michigan 48326 (US)**
• **TUGGLE, Jeremy
Auburn Hills, Michigan 48326 (US)**

(74) Representative: **Continental Corporation
c/o Continental Automotive GmbH
Intellectual Property
Nordostpark 30
90411 Nürnberg (DE)**

(56) References cited:
**EP-A1- 2 682 329          EP-A2- 3 081 405
US-A1- 2018 215 382      US-A1- 2018 251 153
US-A1- 2019 092 109**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
G05D 2105/15; G05D 2107/21; G05D 2109/10;
G05D 2111/10

**Description**

TECHNICAL FIELD

This disclosure relates to a tractor configured to identify one or more pieces of farm equipment positioned proximate the tractor and drive to one of the one or more pieces of farm equipment for the purpose of attaching the equipment to the trailer.

BACKGROUND

Trailers are usually unpowered vehicles, tools, or equipment that are pulled by a powered tow vehicle. When referring to farming equipment the powered tow vehicle is typically referred to as a tractor (rear or front loading) or any other vehicle configured to attach to the trailer and pull the trailer. The trailer, may be any type of farm implement, such as a bailer, a trailer bed, a plow, a seeder, a harvester, a baler, etc. In the instance of front loading tractors, the trailer (i.e. the vehicle is unpowered) may actually be located at the front of the tow vehicle (i.e. the vehicle providing power).
The trailer may be attached to a tractor using a trailer hitch. A receiver hitch mounts on the tractor and connects to the trailer hitch to form a connection. When dealing with farm equipment the connection point, i.e. hitch, between the tractor and the trailer may vary depending on the type of implement of the trailer.
The trailer hitch may be a ball and socket, a fifth wheel and gooseneck, trailer jack, eye and ring, pintle hitch, drawbar, or three-point hitch. Other attachment mechanisms may also be used. In addition to the mechanical connection between the trailer and the tractor, in some examples, the trailer is electrically connected to the tractor. As such, the electrical connection allows the trailer to take the feed from the powered tractor's rear light circuit, allowing the trailer to have lights that are in sync with the powered tractor's lights.
Some of the challenges that face tractor operators are connecting the tractor to the trailer, because more than one person is needed. For example, one person drives the tractor, e.g., the operator, and another one or more people are needed to view the tractor and the trailer and provide the operator with direction regarding the path the tractor has to take to align with the hitch. If the people providing directions to the operator are not accustomed to hitching a tractor to a trailer, then they may have difficulty providing efficient instructions for directing the path of the tractor.
Recent advancements in sensor technology have led to improved safety systems for vehicles. Arrangements and methods for detecting and avoiding collisions are becoming available. Such operator assistance systems use sensors located on the vehicle to detect an ongoing collision. In some examples, the system may warn the operator of one or more driving situations to prevent or minimize collisions. Additionally, sensors and cameras may also be used to alert a operator of possible obstacles when the vehicle is traveling in a forward direction. Therefore, it is desirable to provide a system that includes sensors to overcome the challenges faced by operators of tractors.
US 2018/1251153 A1 describes a method of maneuvering a tow vehicle in reverse for attachment to a trailer. The method includes receiving one or more images from one or more cameras positioned on a back portion of the tow vehicle and identifying one or more trailers within the one or more images. An image with the one or more trailer representations is displayed on a user interface, such as a touch screen display, included in the vehicle, wherein the driver can select one of the trailer representations by pointing the driver's finger on the desired trailer representation or via a rotary knob or a mouse indicating that the driver wants the tow vehicle to autonomously drive and connect to the trailer associated with the selected trailer representation. Then, a path planning system of the tow vehicle determines a path between the tow vehicle and the trailer based on the location of the selected trailer relative to a position of the tow vehicle. The vehicle path includes maneuvers configured to direct the vehicle in a rearward direction along the tow vehicle path from the initial position to the final position, wherein the path is determined such that the tow vehicle, in an intermediate position within a predetermined distance from the trailer, is in an orientation aligned generally parallel with the trailer and facing away from the trailer, where a hitch of the tow vehicle is substantially aligned with a hitch of the trailer. The method also includes executing one or more behaviors causing the vehicle to take an action to autonomously follow the determined vehicle path and execute the maneuvers. Furthermore, as the tow vehicle is moving about the path, the path can be adjusted by the path planning system based on one or more objects that may be identified along the path by a sensor system of the tow vehicle in order to avoid a collision.
US 2018/1215382 A1 describes a trailer hitching assist system for a vehicle which includes a camera disposed at a rear portion of a vehicle and having a field of view rearward of the vehicle. A control includes an image processor operable to process image data captured by the camera. The image processor, via image processing of image data captured by the camera, detects a trailer and trailer hitch rearward of the vehicle and determines, based on estimating the physical position of the trailer relative to the vehicle, a first path of travel for the vehicle to follow so as to maneuver the vehicle so as to have its tow ball aligned with the trailer hitch. The control maneuvers the vehicle along the determined first path of travel. Responsive to detection of an object entering the first path of travel, the control determines a second path of travel and maneuvers the vehicle along the second path of travel to avoid the detected object entering the determined path of travel.

EP 3 081 405 A2 describes a hitch assist system for a vehicle which comprises a camera having a field of view rearward of the vehicle, an input device connected for the hitch assist system, and a controller. The controller includes instructions for detecting a trailer proximate to the vehicle with the camera, determining a vehicle hitch ball location, and determining a trailer hitch location. If there are multiple trailers detected by the controller, the input device provides an option to select which trailer is intended for hitching by outlining the trailer on a screen for the input device and allowing the vehicle driver to select the appropriate trailer by touching the intended trailer or moving a cursor over the intended trailer and selecting. The controller further includes instructions for calculating a vehicle path from an initial position to a final position, wherein the vehicle hitch ball is laterally aligned with the trailer hitch in the final position, and wherein the path is calculated to avoid a collision with objects detected by surrounding sensors of the vehicle. The calculated path is shown as a plotted path virtually on the input device allowing the vehicle driver to confirm prior to the vehicle moving. The controller also includes instructions for calculating the steering and braking maneuvers necessary to move the vehicle along the path to the final position and sending instructions to a vehicle steering system and a vehicle brake system to perform the calculated maneuvers.

US 2019/092109 A1 describes a method of maneuvering a vehicle in reverse for attachment to a trailer. The method includes receiving a trailer hitch receiver image location shown within one or more images from at least one vehicle camera. The method also includes determining, a pixel angular difference in the image between a tow vehicle fore-aft axis and a trailer fore-aft axis, determining a pixel distance between a tow vehicle hitch ball and a hitch receiver, and determining a vehicle path from an initial position to a final position adjacent the trailer. The vehicle path includes maneuvers configured to move the vehicle along the vehicle path from the initial position to the final position. Then autonomously following, at a drive system in communication with the computing device, the vehicle path from the initial position to the final position. Furthermore, if an object is detected along the path, the path is recalculated based on data relating to the position of the object to avoid a collision

SUMMARY

The invention relates to a method according to claim 1 and to a system according to claim 7.

One general aspect includes a method of maneuvering a tractor in reverse for attachment to a trailer using a hitch assist system, the method including: entering a hitch assist mode. The method also includes displaying a camera image on a user interface, where the displayed image shows at least one camera. The method also includes receiving, at a user interface in communication an indication of a selected trailer. The method also includes determining a planned path with a computing device a tractor path from an initial position to a final position adjacent the trailer, the tractor path including maneuvers configured to move the tractor along the tractor path from the initial position to the final position. The method also includes autonomously following, at a drive system in communication with the computing device, the tractor path from the initial position to the final position.

Implementations may include one or more of the following features. The method further including: continuously detecting, at the neural network, one or more objects within the tractor path as the tractor is moving along the tractor path. The method may also include when detecting an object, altering the tractor path at the computing device. The method where detecting one or more trailers includes: capturing, at one or more imaging devices in communication with the neural network, one or more images, at least one of the one or more imaging devices positioned on a back side of the trailer facing a rearward direction. The method may also include determining, at the neural network, the one or more trailers within the one or more images. The method where displaying on the user interface further includes receiving, at a controller, one or more images from one or more cameras positioned on a back portion of the tractor and in communication with the controller, and overlaying, at the controller, a path representation indicative of an expected path the tractor drives along, the expected path starting at a tractor hitch. The method where selecting the trailer further includes receiving, at the controller, a first command by way of a user interface, the first command indicative of a change in the path representation such that the path representation ends at a point of interest, and adjusting, at the controller, the path representation based on the first command and where the path planning is completed by a controller for the hitch assist system. The method further including: stopping or halting, at the drive system, the tractor at an intermediate position before reaching the final position, the intermediate position being closer to the final position than the initial position. The method may also include modifying, at the drive system, one or more tractor suspensions associated with the tractor to align a tractor hitch with a trailer hitch. The method may also include autonomously following, at the drive system, the tractor path from the intermediate position to the final position. The method may also include connecting, at the drive system, the tractor hitch with the trailer hitch. The method where connecting a tractor hitch with a trailer hitch includes modifying one or more tractor suspensions associated with the tractor to align a tractor hitch with a trailer hitch.

One aspect of the disclosure provides a method of autonomously driving a vehicle in a rearward direction towards a point of interest. The method includes receiving, at data processing hardware, one or more images from a camera positioned on a back portion of the vehicle and in communication with the data processing hardware. The method also includes receiving, at the data processing hardware, a operator planned path from a user interface in communication with the data processing hardware. The operator planned path includes a plurality of waypoints. The method includes transmitting, from the data processing hardware to a drive system in communication with the data processing hardware, one or more commands causing the vehicle to autonomously maneuver along the operator planned path. The method includes determining, at the data processing hardware, a current vehicle position. In addition, the method includes determining, at the data processing hardware, an estimated subsequent vehicle position based on the operator planned path. The estimated subsequent vehicle position being at a subsequent waypoint along the operator planned path from the current vehicle position. The method also includes determining, at the data processing hardware, a path adjustment from the current vehicle position to the estimated subsequent vehicle position. Additionally, the method includes transmitting, from the data processing hardware to the drive system, instructions causing the vehicle to autonomously maneuver towards the estimated subsequent vehicle position based on the path adjustment.

Another aspect of the disclosure provides a system for autonomously maneuvering a vehicle in a rearward direction towards a point of interest. The system includes: data processing hardware; and memory hardware in communication with the data processing hardware. The memory hardware stores instructions that when executed on the data processing hardware cause the data processing hardware to perform operations that include the methods described above.

Implementations of the aspects of the disclosure may include one or more of the following optional features. In some implementations, the method includes overlaying a path on the one or more images and receiving a command by way of the user interface in communication with the data processing hardware. The command including instructions to adjust the path as the operator planned path. The command may include instructions to adjust a distance of the path. In some examples, the command includes instructions to adjust an angle of the path. The command may include instructions to adjust an angle of an end portion of the path.

In some examples, determining the current vehicle position includes receiving wheel encoder sensor data associated with one or more wheels and receiving steering angle sensor data. The current vehicle position is based on the wheel encoder sensor data and the steering angle sensor data.

The details of one or more implementations of the disclosure are set forth in the accompanying drawings and the description below. Other aspects, features, and advantages will be apparent from the description and drawings, and from the claims.

## DESCRIPTION OF DRAWINGS

FIG. 1 is a schematic view of an exemplary tractor having a user interface displaying an indication of trailers behind the tractor.

FIGS. 2 is a schematic view of an exemplary tractor.

FIGS. 3A and 3B are perspective views of an exemplary tractor autonomously maneuvering along a planned path.

FIG. 4A is a perspective view of an exemplary tractor at an initial position.

FIG. 4B is a perspective view of an exemplary tractor at an intermediate position.

FIG. 4C is a perspective view of an exemplary tractor at a final position.

FIGS. 5A-5D are perspective views of an exemplary hitch connecting to a trailer hitch for the exemplary tractor system.

FIGS. 6A and 6B are schematic views of a second exemplary tractor system.

FIGS. 7A and 7B are schematic views of exemplary state charts of the system.

FIGS. 8A and 8B are schematic views of an exemplary angle mode for the second exemplary tractor system.

FIGS. 9A and 9B are schematic views of an exemplary distance mode for the second exemplary tractor system.

FIGS. 10A and 10B are schematic views of an exemplary bi-arc mode for the second exemplary tractor system.

FIGS. 11A-11B are schematic views of the trajectory generation calculations.

FIGS. 12A-12D are schematic views of the motion estimation calculations for the second exemplary tractor system.

FIG. 13 is a schematic view of an exemplary method of autonomously driving a vehicle in a rearward direction towards a point of interest.

FIG. 14 is a flow diagram of an exemplary arrangement of operations for operating a tractor in reverse for attachment to a trailer for the first and second exemplary tractor system.

FIG. 15 is a schematic view of an exemplary method of autonomously driving a vehicle in a rearward direction towards a point of interest.

Like reference symbols in the various drawings indicate like elements.

DETAILED DESCRIPTION

A tractor, such as, but not limited to a rear load tractor or a front load tract, hereinafter referred to as a tractor may be configured to tow a trailer. The tractor may be other types of vehicles and farm equipment that are powered and configured to pull other farm implements. The trailer, may be any type of farm implement, such as a bailer, a trailer bed, a plow, a seeder, a harvester, a baler, etc. In the instance of front loading tractors, the trailer (i.e. the vehicle is unpowered) may actually be located at the front of the tractor (i.e. the vehicle providing power). Hereinafter all such equipment will be referred to as the trailer.

The tractor connects to the trailer by way of a trailer hitch. It is desirable to have a tractor that is capable to autonomously maneuvering towards a trailer and attaching to the trailer, thus eliminating the need for a operator to drive the tractor (e.g. in a rearward direction) while another one or more people provide the operator with directions regarding the path that the has to take to align with the trailer and ultimately a hitch of the trailer. As such, a tractor with an autonomous driving and hitching feature provides a operator with a safer and faster experience when hitching the tractor to the trailer.

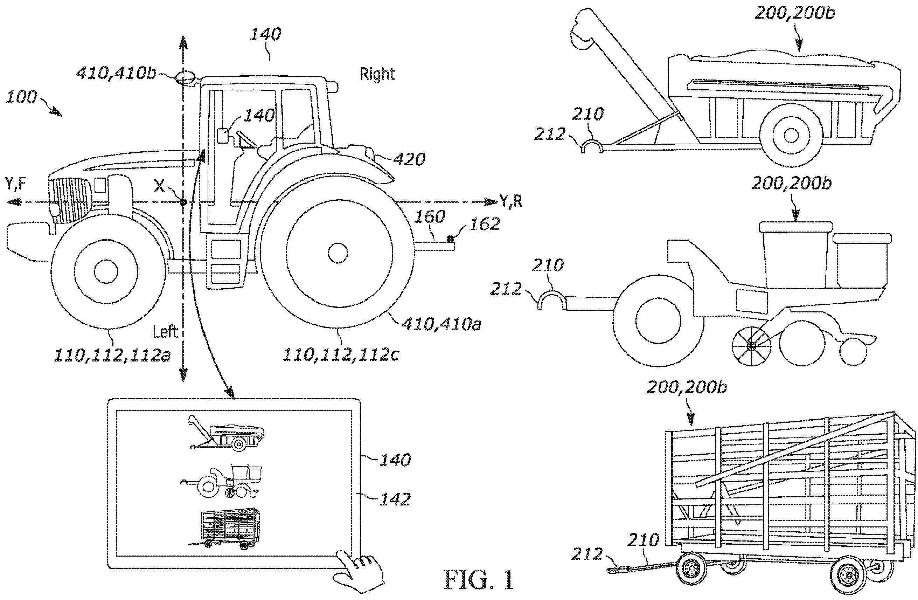

Referring to FIGS. 1-2B, in some implementations, a operator of a tractor 100 wants to tow a trailer 200, 200a-c, for example, a specific trailer 200a-c from a group of trailers 200, 200a-c. The tractor 100 may be configured to receive an indication of a operator selection 144 associated with a selected trailer 200, 200a-c and autonomously drive towards the selected trailer 200, 200a-c. The tractor 100 may include a drive system 110 that maneuvers the tractor 100 across a surface based on drive commands having x, y, and z components, for example. As shown, the drive system 110 includes a front right wheel 112, 112a, a front left wheel 112, 112b, a rear right wheel 112, 112c, and a rear left wheel 112, 112d. The drive system 110 may include other wheel configurations as well. The drive system 110 may also include a brake system 120 that includes brakes associated with each wheel 112, 112a-d, and an acceleration system 130 that is configured to adjust a speed and direction of the tractor 100. In addition, the drive system 110 may include a suspension system 132 that includes tires associates with each wheel 112, 112a-d, tire air, springs, shock absorbers, and linkages that connect the tractor 100 to its wheels 112, 112a-d and allows relative motion between the tractor 100 and the wheels 112, 112a-d. The suspension system 132 improves the handling of the tractor 100 and provides a better ride quality by isolating noise, bumps, and vibrations. In addition, the suspension system 132 is configured to adjust a height of the tractor 100 allowing the tractor hitch 160 to align with the trailer hitch 210, which allows for autonomous connection between the tractor 100 and the trailer 200.

The tractor 100 may move across the surface by various combinations of movements relative to three mutually perpendicular axes defined by the tractor 100: a transverse axis X, a fore-aft axis Y, and a central vertical axis Z. The transverse axis x, extends between a right side R and a left side of the tractor 100. A forward drive direction along the fore-aft axis Y is designated as F, also referred to as a forward motion. In addition, an aft or rearward drive direction along the fore-aft direction Y is designated as R, also referred to as rearward motion. When the suspension system 132 adjusts the suspension of the tractor 100, the tractor 100 may tilt about the X axis and or Y axis, or move along the central vertical axis Z. The example shown herein is a trailer 200 that is located in a rear position of the tractor 100. However, this is merely shown as exemplary in nature and one skilled in the art would be able to apply this embodiment to a trailer 200 that is located on a fore or generally aft position of the tractor 100 as well. Alternatively, one skilled in the art would be able to apply this embodiment to a tractor 100 that would have a front-loading tractor hitch 160. Further, the tractor 100 and trailer 200 which are shown are using a hitch with a ball style hitch and receiver for the sake of drawing simplicity. Other styles of hitches may be used with the exemplary embodiments.

The tractor 100 may include a user interface 140, such as, a display. The user interface 140 receives one or more user commands from the operator via one or more input mechanisms or a touch screen display 142 and/or displays one or more notifications to the operator. The user interface 140 is in communication with a controller 300, which is in turn in communication with a sensor system 400. In some examples, the user interface 140 displays an image of an environment of the tractor 100 leading to one or more commands being received by the user interface 140 (from the operator) that initiate execution of one or more behaviors. The controller 300 includes a computing device (or processor) 302 (e.g., central processing unit having one or more computing processors) in communication with non-transitory memory 304 (e.g., a hard disk, flash memory, random-access memory) capable of storing instructions executable on the computing processor(s)).

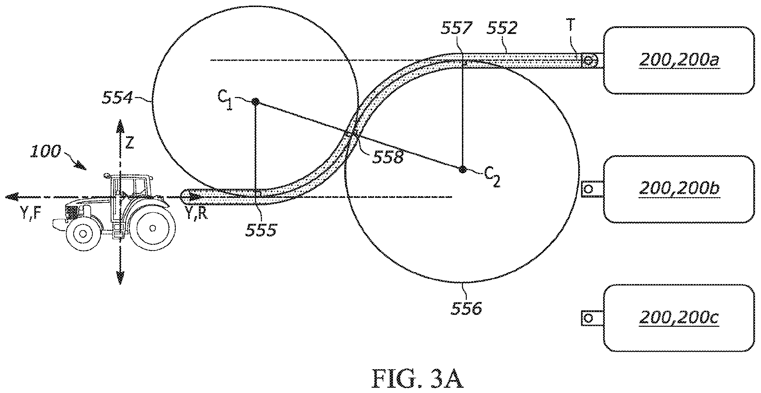

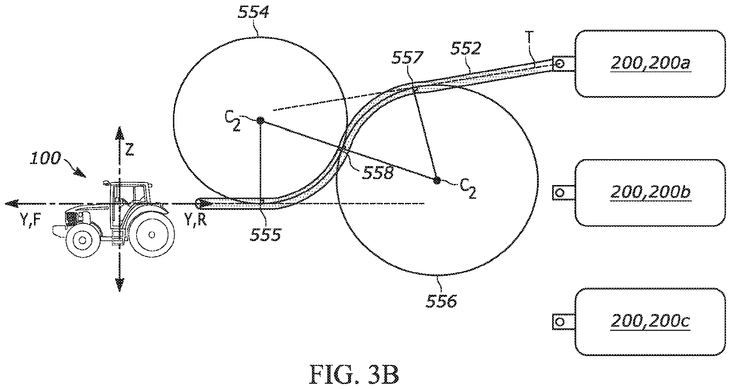

The controller 300 executes a operator assistance system 310, which in turn includes a path following sub-system 320. The path following sub-system 320 receives a planned path 552 (FIGS. 3A and 3B) from a path planning system 550 and executes behaviors 322-330 that send commands 301 to the drive system 110, leading to the tractor 100 autonomously driving about the planned path 552 in a rearward direction R.

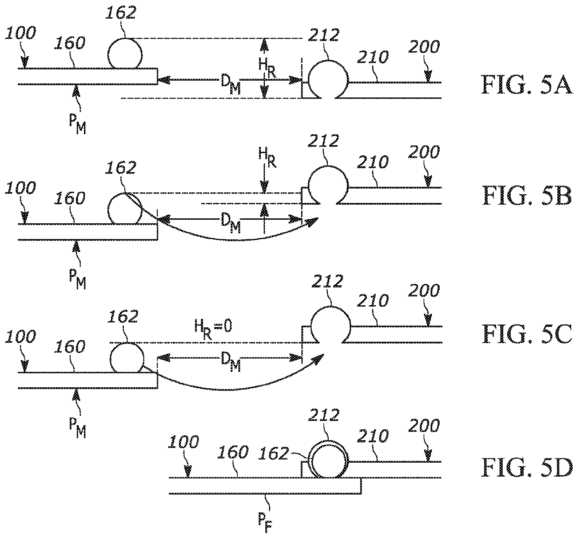

The path following sub-system 320 includes, a braking behavior 322, a speed behavior 324, a steering behavior 326, a hitch connect behavior 328, and a suspension adjustment behavior 330. Each behavior 330, 330a-c cause the tractor 100 to take an action, such as driving backward, turning at a specific angle, breaking, speeding, slowing down, among others. The controller 300 may maneuver the tractor 100 in any direction across the surface by controlling the drive system 110, more specifically by issuing commands 301 to the drive system 110. For example, the controller 300 may maneuver the tractor 100 from an initial position (as shown in Fig. 5A) to a final position (as shown in FIG. 5C). In the final position, a hitch coupler 162 of the tractor 100 aligns with a hitch coupler 212 of the trailer 200 connecting the tractor 100 and the selected trailer 200, 200a-c.

The tractor 100 may include a sensor system 400 to provide reliable and robust autonomous driving. The sensor system 400 may include different types of sensors that may be used separately or with one another to create a perception of the tractor's environment that is used for the tractor 100 to autonomously drive and make intelligent decisions based on objects and obstacles detected by the sensor system 400. The sensors may include, but not limited to, one or more imaging devices (such as cameras) 410, and sensors 420 such as, but not limited to, radar, sonar, LIDAR (Light Detection and Ranging, which can entail optical remote sensing that measures properties of scattered light to find range and/or other information of a distant target), LADAR (Laser Detection and Ranging), etc. In addition, the camera(s) 410 and the sensor(s) 420 may be used to alert the operator of possible obstacles when the tractor 100 is traveling in the forward direction F or in the rearward direction R, by way of audible alerts and/or visual alerts via the user interface 140. Therefore, the sensor system 400 is especially useful for increasing safety in tractors 100 which operate under semi-autonomous or autonomous conditions.

In some implementations, the tractor 100 includes a rear camera 410, 410a that is mounted to provide a view of a rear driving path for the tractor 100. Additionally, in some examples, the tractor 100 includes a front camera 410, 410b to provide a view of a front driving path for the tractor 100, a right camera 410, 410c positioned on the right side of the tractor 100, and a left camera 410, 410d positioned on the left side of the tractor 100. The left and right cameras 410, 410c, 410d provide additional side views of the tractor 100. In this case, the tractor 100 may detect object and obstacles positioned on either side of the tractor 100, in addition to the objects and obstacle detected along the front and rear driving paths. The camera(s) 410, 410a-d may be a monocular camera, binocular camera, or another type of sensing device capable of providing a view of the rear travelling path of the tractor 100.

In some implementations, the tractor 100 includes one or more Neural Networks (NN) 500, for example, Deep Neural Networks (DNN) to improve the autonomous driving of the tractor 100. DNNs 500 are computational approaches used in computer science, among other disciplines, and are based on a large collection of neural unites, loosely imitating the way a biological brain solves problems with large clusters of biological neurons connected by axons. DNNs 500 are self-learning and trained, rather than programed, and excel in areas where the solution feature detection is difficult to express in a traditional computer program. In other words, DNNs 500 are a set of algorithms that are designed to recognize patterns. DNNs 500 interpret sensor system data 402 (e.g., from the sensor system 400) through a machine perception, labeling or clustering raw input. The recognized patters are numerical, vectors, into which all-real-world data, such as images, text, sound, or time series is translates. The DNN 500 includes multiple layers of nonlinear processing units 502 in communication with DNN non-transitory memory 504. The DNN non-transitory memory 504 stores instructions that when executed on the nonlinear processing units 502 cause the DNN 500 to provide an output 506, 508. Each nonlinear processing unit 502 is configured to transform an input or signal (e.g., sensor system data 402) using parameters that are learned through training. A series of transformations from input (e.g., sensor system data 402) to outputs 506, 508 occurs at the multiple layers of the nonlinear processing units 502. Therefore, the DNN 500 is capable of determining the location based on images 412 or sensor data 422 eliminating the need to have a DGPS or a GPS.

The DNN 500 receives sensor system data 402 (including images 412 and/or sensor data 422) and based on the received data 402 provides an image output 506 to the user interface 140 and/or a data output 508 to the controller 300. In some examples, the DNN 500 receives image(s) 412 of a rear view of the tractor 100 from the camera 410 in communication with the DNN 500. The DNN 500 analyzes the image 412 and identifies one or more trailers 200 in the received image 412. The DNN 500 may also receive sensor data 420 from the sensors 420 in communication with the DNN 500, and analyze the received sensor data 420. Based on the analyzed images 412 (or the analyzed images 412 and the sensor data 422), the DNN 500 identifies the location of each identified trailers 200 relative to the tractor 100, for example by way of a coordinate system. As such, the DNN 500 displays on the user interface 140 the received images 412 displaying trailer representations 146, 146a-c of the identified trailers 200, 200a-c located at a distance behind the tractor 100. As shown in FIG. 1, first, second, and third trailers 200a, 200b, 200c are positioned behind the tractor 100. As such, the user interface 140 displays first, second, and third trailer representations 146a, 146b, 146c associated with the first, second, and third trailers 200a, 200b, 200c respectively.

The operator may select one of the trailer representations 146, 146a-c indicating that the operator wants the tractor 100 to autonomously drive and connect to the trailer 200, 200a-c associated with the selected trailer representation 146, i.e., the operator selection 144. In some examples, the user interface is a touch screen display 142; as such, the operator may point his finger and select the trailer representation 146. In other examples, the user interface 140 is not a touchscreen and the operator may use an input device, such as, but not limited to, a rotary knob or a mouse to select one of the trailer representations 146, 146a-c.

When the operator selects which trailer 200, 200a-c he/she wants the tractor 100 to connect to, a path planning system 550 plans a path 552 (FIG. 3) between the tractor 100 and the trailer 200 based on the location of the selected trailer 200, 200a-c (determined by the DNN 500 from the received sensor system data 402) relative to a position of the tractor 100 (e.g., orientation and distance). As the tractor 100 is autonomously backing up towards the selected trailer 200 (the first trailer 200a as shown in FIG. 1). The planned path 552 allows the tractor 100 to autonomously drive and connect to the trailer 200. The path planning system 550 plans the path 552 for the tractor 100 to autonomously maneuver such that the tractor 100, in an intermediate position within a predetermined distance D from the trailer 200, is in an orientation aligned generally parallel with the trailer 200 and facing away from the trailer 200, where the hitch 160 of the tractor 100 is substantially aligned with the hitch 210 of the trailer 200.

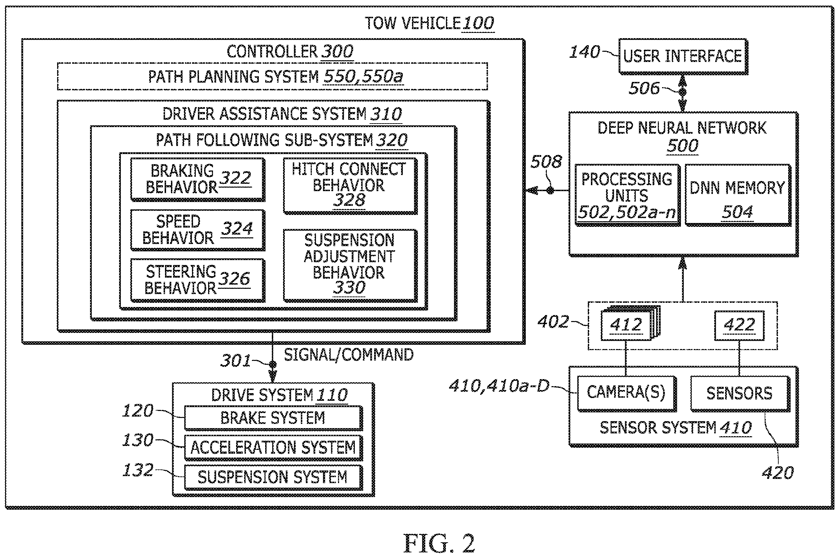

In some examples, the path planning system 550 is part of the controller 300 as shown in FIG. 2A; while in other examples, the path planning system 550 is part of the DNN 500 as shown in FIG. 2B. Referring to FIG. 2A, when the operator selects the trailer representation 146a associated with the trailer 200a that the operator wants the tractor 100 to autonomously drive towards and connect with, the DNN 500a sends the controller 300 data output 508 including the selected trailer 200a and the location of the selected trailer 200a with respect to the tractor 100. In this case, the path planning system 550a plans the path 552 between the tractor 100 and the selected trailer 200a. The path planning system 550a may use several methods to determine the path 552. FIGS. 3A and 3B provide a method for path planning. In some examples, the path planning system 550a extends its fore-aft axis Y in the rearward direction R while the trailer 200a extends a fore-aft axis about the length of the trailer 200 in a forward direction. The path planning system 550a draws a first circle 554 tangent at a first tangent point 555 to the tractor fore-aft axis Y facing the trailer fore-aft axis, and a second circle 556 tangent at a second tangent point 557 to the trailer fore-aft axis facing the tractor fore-aft axis Y. The first and second circles 554, 556 intersect at an intersection point 558. The size of the first and second circles 554, 556 may be adjusted and manipulated based on the distance between the tractor 100 and the trailer 200, obstacles and object positioned between the tractor 100 and the trailer 200, and any other considerations. The path planning system 550a determines the path 552 by following the tractor fore-aft axis Y until the first tangent point 555, then moving along an arc of the first circle 554 until the intersection point 558, then moving along an arc of the second circle 556 until the second tangent point 557, then following the trailer fore-aft axis. As such, the planned path 552 positions the tractor 100 in an orientation aligned generally parallel with the trailer 200 and facing away from the trailer 200a, where the hitch 160 of the tractor 100 is substantially aligned with the hitch receiver 212 of the trailer hitch 210 for the trailer 200. In other words, where the fore-aft axis Y of the tractor 100 is substantially aligned with the fore-aft axis T of the trailer 200a. FIG. 3A shows an example of the path 552 where the fore-aft axis Y of the tractor 100 is substantially parallel to the fore-aft axis T of the trailer 200a. While FIG. 3B shows an example of the path 552 where the fore-aft axis Y of the tractor 100 is not substantially parallel to the fore-aft axis T of the trailer 200a.

With continued reference to FIGS. 2A, 3A and 3B, in some examples, when the tractor 100 is autonomously driving along the planned path 552, the DNN 500 continuously sends the controller 300 the location of the selected trailer 200a with respect to the tractor 100 as the tractor 100 moves along the planned path 552 based on the received sensor system data 402, i.e., images 412. Since the images 412 are updated as the tractor 100 approaches the selected trailer 200a, then the location of the selected trailer 200a with respect to the tractor 100 also changes as the tractor 100 moves closer to the selected trailer 200a. In some examples, the DNN 500 identifies one or more objects along the planned path 552 and sends the path planning system 550a data relating to the position of the one or more objects. In this case, the path planning system 550a may recalculate the planned path 552 to avoid the one or more objects. In some examples, the path planning system 550a determined a probability of collision and if the probability of collision exceeds a predetermined threshold, the path planning system 550a adjusts the path and sends it to the path following sub-system 320.

Referring back to FIG. 2B, in some implementations the DNN 500 includes the path planning system 550b. As such, the path planning system 550b may determine a path 552 based on learned behaviors. For example, the DNN 500 determines the position of the selected trailer 200a, and based on the position determines a path 552 for the tractor 100. In some examples, the determined path 552 may be similar to the path described with respect to FIGS. 3A and 3B. However, other path determination methods may also be possible. Similarly, the DNN 500, i.e., the path planning system 550b of the DNN 500 adjusts the planned path 552 based on one or more objects (moving or stationary) that may be identified within the planned path 552 as the tractor 100 is moving about the path 552. In some examples, the path planning system 550b determined a probability of collision and if the probability of collision exceeds a predetermined threshold, the path planning system 550b adjust the path and sends it to the path following sub-system 320.

Referring back to FIGS. 2A and 2B, once the path planning system 550 plans a path 552, the path following sub-system 320 is configured to execute behaviors the cause the drive system 110 to autonomously follow the planned path 552. Therefore, the path following sub-system 320 includes one or more behaviors 322-330 that once executed allow for the autonomous driving of the tractor 100 along the planned path 552. The behaviors 322-330 may include, but are not limited to a braking behavior 322, a speed behavior 324, a steering behavior 326, a hitch connect behavior 328, and a suspension adjustment behavior 330.

The braking behavior 322 may be executed to either stop the tractor 100 or to slow down the tractor based on the planned path 552. The braking behavior 322 sends a signal or command 301 to the drive system 110, e.g., the brake system 120, to either stop the tractor 100 or reduce the speed of the tractor 100.

The speed behavior 324 may be executed to change the speed of the tractor 100 by either accelerating or decelerating based on the planned path 552. The speed behavior 324 sends a signal or command 301 to the brake system 120 for decelerating or the acceleration system 130 for accelerating.

The steering behavior 326 may be executed to change the direction of the tractor 100 based on the planned path. As such, the steering behavior 326 sends the acceleration system 130 a signal or command 301 indicative of an angle of steering causing the drive system 110 to change direction.

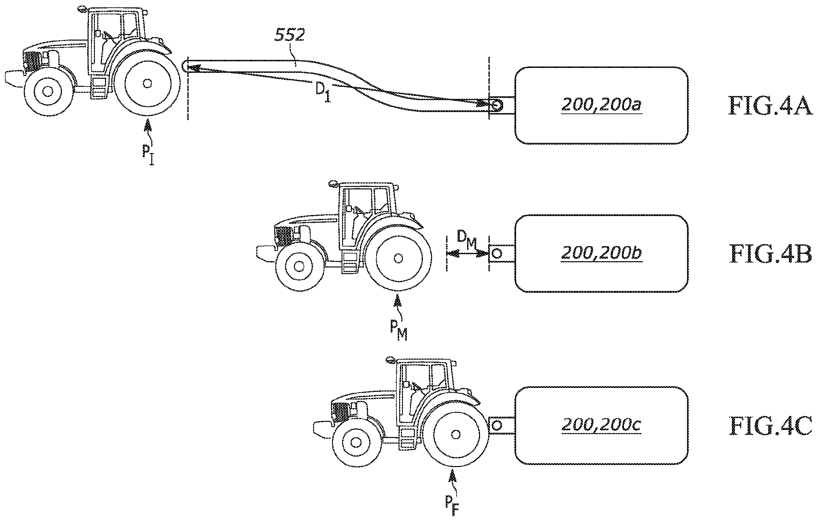

FIGS. 4A-4C show the tractor 100 at an initial position Pi (FIG. 4A), an intermediate position $P_M$ (FIG. 4B), and a final position $P_F$ (FIG. 4C) or a connected position, with respect to the selected trailer 200a. Referring to FIG. 4A, the tractor 100 is at the initial position Pr relative to the trailer 200 prior to initiating autonomous maneuvering towards the selected trailer 200a. In some examples, an initial distance $D_I$ between the tractor 100 and the selected trailer 200a is about 15 meters. The tractor 100 autonomously maneuvers along the planned path 552 until the tractor 100 reaches an intermediate position $P_M$ being an intermediate distance $D_M$ from the selected trailer 200a, as shown in FIG. 4B. In the intermediate position $P_M$, the tractor hitch 160 is in an orientation aligned generally parallel with the selected trailer 200a and the tractor hitch 160 is substantially aligned with the trailer hitch receiver/coupler 212 of trailer hitch 210. In other words, the tractor fore-aft Y defines a plane that extends along the tractor vertical axis Z and along the trailer fore-aft T along a trailer vertical axis. In some examples, the intermediate distance $D_M$ is about 1 meter.

Referring to FIGS. 5A-5D, in some examples, when the tractor 100 is in the intermediate position $P_M$ the hitch connect behavior 328 executes to connect the tractor hitch 160 with the trailer hitch 210. The example shown is using a ball style hitch and receiver. However, the exemplary embodiment of FIGS 5A-D may be implemented with any style hitch that utilizes a vertical arrangement between the tractor hitch and the hitch receiver. For hitch styles which involve a horizontal arrangement between the tractor hitch and the hitch receiver, vertical maneuvers may only be necessary to obtain the desired horizontal alignment between the components, or not necessary at all.

The controller 300 determines a relative height $H_R$ between a top portion of the tractor hitch coupler 162 and a bottom portion of the trailer hitch coupler 212. To connect the tractor 100 and the selected trailer 200a, the trailer hitch coupler 212 releasably receives the tractor hitch coupler 162. Therefore, to connect the tractor hitch coupler 162 to the trailer hitch coupler 212, the relative height $H_R$ has to equal zero allowing the tractor hitch coupler 162 to move under and be inserted in the trailer hitch coupler 212. Therefore, when the hitch connect behavior 328 receives the relative height $H_R$ that is greater than zero between the tractor hitch coupler 162 and the trailer hitch coupler 212 from the controller 300, the hitch connect behavior 328 sends a command to the suspension adjustment behavior 330 to execute and issue a command 301 to the suspension system 132 to adjust the height of the tractor 100 reducing the relative height $H_R$ based on the measurements from the controller 300. When the hitch connect behavior 328 receives the relative height $H_R$ that is equal to zero, then the hitch connect behavior 328 issues a command 301 to the drive system 110 to maneuver along the remainder of the path 552, i.e., from the intermediate position $P_M$ to the final position $P_F$ (FIG. 4C), connecting the tractor 100 to the selected trailer 200a.

Referring to FIGS. 1 and 6A-7B a second exemplary tractor 100 is illustrated. Again, the tractor 100 may include a camera 410 configured to capture images 412 of the environment of the tractor 100. The images 412 are displayed on a display 142 that shows a trailer representation of the trailer 200 positioned behind the tractor 100. The operator identifies a trajectory or path 554 within the received images 412 that will position the tractor hitch coupler 552 under or adjacent the trailer hitch coupler 212. Based on the operator identified path 554 within the images 412, the tractor 100 autonomously drives along the identified path 554.

The tractor 100 may include a user interface 400. The user interface 400 may include the display 142, a knob 143, and a button 145, which are used as input mechanisms. In some examples, the display 142 may show the knob 143 and the button 145. While in other examples, the knob 143 and the button 145 are a knob button combination. In some examples, the user interface 400 receives one or more operator commands from the operator via one or more input mechanisms or a touch screen display 142 and/or displays one or more notifications to the operator. The user interface 400 is in communication with a tractor controller 300, which is in turn in communication with a sensor system 400. In some examples, the display 142 displays an image of an environment of the tractor 100 leading to one or more commands being received by the user interface 400 (from the operator) that initiate execution of one or more behaviors. In some examples, the user display 142 displays a representation image of the rearward environment of the tractor 100. In this case, the operator can select a position within the representation of the image that is indicative of the environment that the operator wants the vehicle to autonomously maneuver towards. In some examples, the user display 142 displays one or more representations of trailers 200 positioned behind the tractor 100. In this case, the operator selects which representation of a trailer 200 the tractor 100 to autonomously maneuver towards.

The display 142 displays an expected path 554 of the tractor 100 that is superimposed on a camera image 412 of the rearward environment of the tractor 100. The operator may change the expected path 554 using the user interface 400. For example, the operator may turn the knob 143, which simulates a virtual steering wheel. As the operator is turning the knob 143, the expected path shown on the display 142 updates. The operator adjusts the displayed path 554 until an expected path displayed on the display 142 intersects the trailer representation or other object that the user wants the tractor 100 to drive towards. Once the user is satisfied with the expected path 554 displayed, then the operator executes an action indicative of finalizing the path 554 which allows the tractor 100 to autonomously follow the planned path 554. The planned path 554 is the path from the tractor hitch coupler 552 to the trailer hitch receiver/coupler 212. The wheel path 552 is the estimated path the wheels will move along the planned path 554.

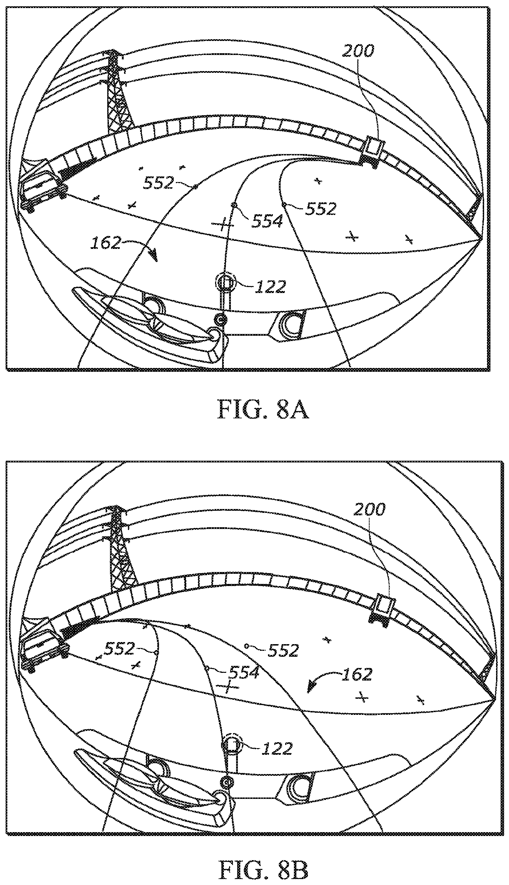

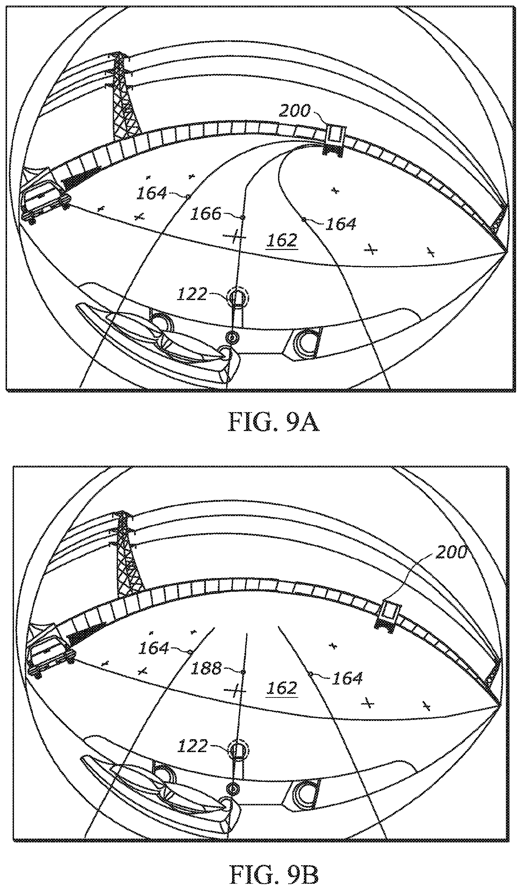

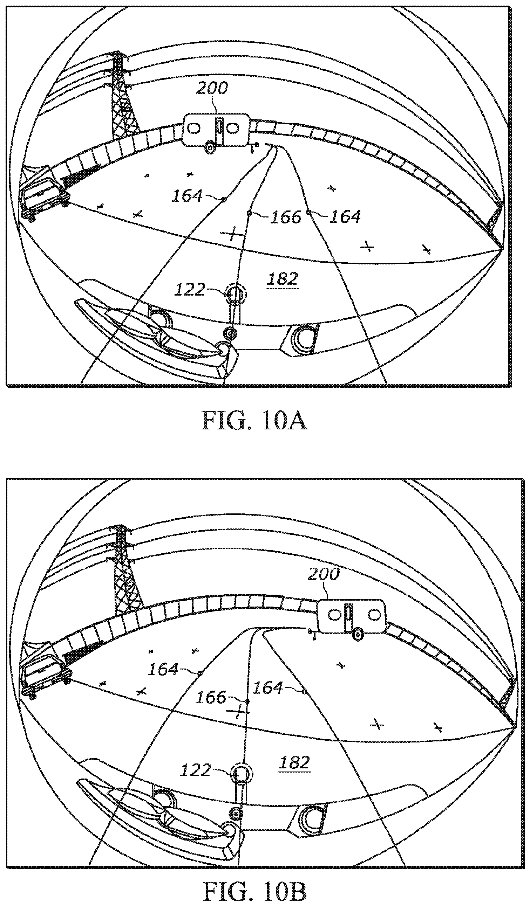

In some implementations, the user may adjust three path modes 312, including an angle mode 314 for adjusting a curvature angle of the path as shown in FIGS. 8A and 8B, a distance mode 316 for adjusting a length of the expected path 554 as shown in FIGS. 9A and 9B, and optionally a bi-arc mode 318 for adjusting and "approach angle" for how the vehicle will be oriented with respect to the trailer (or other object) at the end of the maneuver as shown in FIGS. 10A and 10B. Since the bi-arc mode is optional, if the user is satisfied with the currently constructed path (a circular arc), then the user can finalize the maneuver choice by pressing the button another time. Otherwise, the user adjusts the knob for the third time to change the shape of a bi-arc or other suitable path. This allows for adjusting the final approach angle to the trailer or other object. Once the user is satisfied with the choice of approach angle, he/she presses the button to finalize the path choice.

The tractor controller 300 includes a computing device (or processor) 302 (e.g., central processing unit having one or more computing processors) in communication with non-transitory memory 304 (e.g., a hard disk, flash memory, random-access memory) capable of storing instructions executable on the computing processor(s) 302.

The tractor controller 300 executes a operator assistance system 310 that receives a planned path 552 from a path system 550 and executes behaviors 330, 330a-330c that send commands 301 to the drive system 110, leading to the tractor 100 autonomously driving about the planned path 554 in a rearward direction R (in the example shown).

The path following behaviors 330 include a braking behavior 330a, a speed behavior 330b, and a steering behavior 330c. In some examples, the path following behaviors 330 also include a hitch connect behavior, and a suspension adjustment behavior. Each behavior 330, 330a-330c causes the tractor 100 to take an action, such as driving backward, turning at a specific angle, breaking, speeding, slowing down, among others. The tractor controller 300 may maneuver the tractor 100 in any direction across the surface by controlling the drive system 110, more specifically by issuing commands 301 to the drive system 110.

The tractor 100 may include a sensor system 400 to provide reliable and robust driving. The sensor system 400 may include different types of sensors that may be used separately or with one another to create a perception of the environment of the tractor 100 that is used for the tractor 100 to drive and aid the operator in make intelligent decisions based on objects and obstacles detected by the sensor system 400. The sensor system 400 may include the one or more cameras 410. In some implementations, the tractor 100 includes a rear camera 410, 410a that is mounted to provide a view of a rear-driving path for the tractor 100. The rear camera 410 may include a fisheye lens that includes an ultra wide-angle lens that produces strong visual distortion intended to create a wide panoramic or hemispherical image. Fisheye cameras capture images having an extremely wide angle of view. Moreover, images captured by the fisheye camera have a characteristic convex non-rectilinear appearance. Other types of cameras may also be used to capture images of the rear of the tractor 100.

The sensor system 400 may also include the IMU (inertial measurement unit) 420 configured to measure the tractor's linear acceleration (using one or more accelerometers) and rotational rate (using one or more gyroscopes). In some examples, the IMU 420 also determines a heading reference of the tractor 100. Therefore, the IMU 420 determines the pitch, roll, and yaw of the tractor 100.

The sensor system 400 may include other sensors such as, but not limited to, radar, sonar, LIDAR (Light Detection and Ranging, which can entail optical remote sensing that measures properties of scattered light to find range and/or other information of a distant target), LADAR (Laser Detection and Ranging), etc.

The tractor controller 300 executes a hitch assist system 310 that receives images 412 from the camera 410 and superimposes a tractor path 552 on the received image 412.

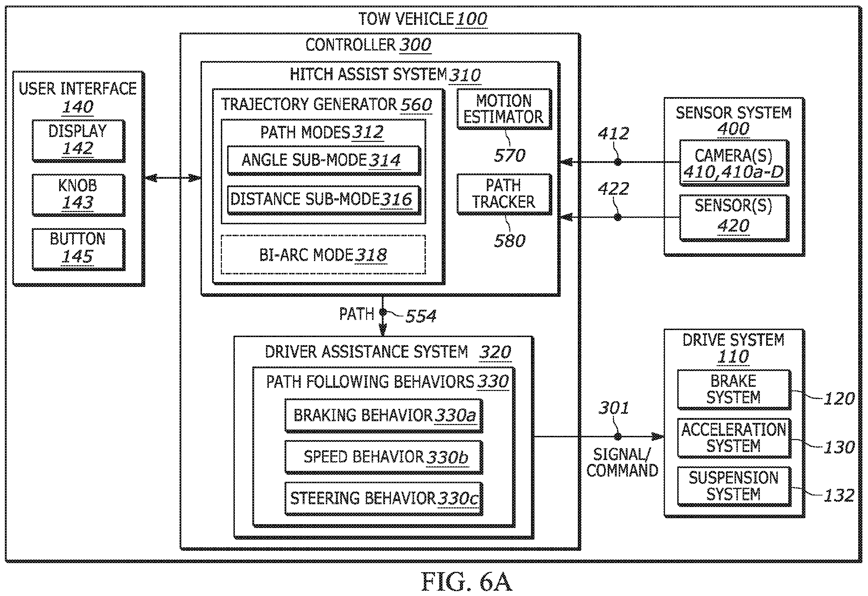

Referring back to FIGS. 6A-6B, the tractor controller 300 executes a hitch assist system 310 that aids the operator in selecting a path 552 for autonomously driving the tractor 100 towards the trailer 200. The operator may initiate execution of the hitch assist system 160 by way of the user interface 140, for example, making a selection on the display 142. Once initiated, the hitch assist system 160 instructs the display 142 to display a path 552 of the tractor 100 that is superimposed on the camera image 143 of the rearward environment of the tractor 100. The operator may change the planned path 552 using the user interface 140. For example, the operator may turn the knob 143, which simulates a virtual steering wheel. As the operator is turning the knob 143, the planned path 552 shown on the display 142 is updated. The operator adjusts the displayed path 552 until an updated planned path 552 displayed on the display 142 intersects the trailer representation 138 or other object that the operator wants the tractor 100 to drive towards. Once the operator is satisfied with the planned path 552 displayed, then the operator executes an action indicative of finalizing the path 552 which allows the tractor 100 to autonomously follow the planned path.

In some implementations, the hitch assist system 160 includes a trajectory generator 560, a motion estimator 570, and a path tracker 580. The trajectory generator 560 determines an estimated position of the tractor 100 based on the operator selected path 552. The motion estimator 570 determines an actual position of the tractor 100, and the path tracker 580 determines an error 562 based on the estimated position Pe and the actual position Pa and adjusts the planned path 552 of the tractor 100 to eliminate the error 562 between the actual position Pa and the estimated position Pe.

In some implementations, the trajectory generator 560 receives images 143 from the camera 410 and superimposes the vehicle path 552 on the received image 143. The operator may adjust the path 552 selection based on one or more path modes 312. In some examples, the path modes 312 include an arc mode 312 having an angle sub-mode 314 and a distance sub-mode 316. In some examples, the path modes 312 may include a bi-arc mode 318. Therefore, the operator may select between the angle sub-mode 314, the distance sub-mode, and/or the bi-arc mode 318 for determining and adjusting the path 552 to a trailer 200 or an object.

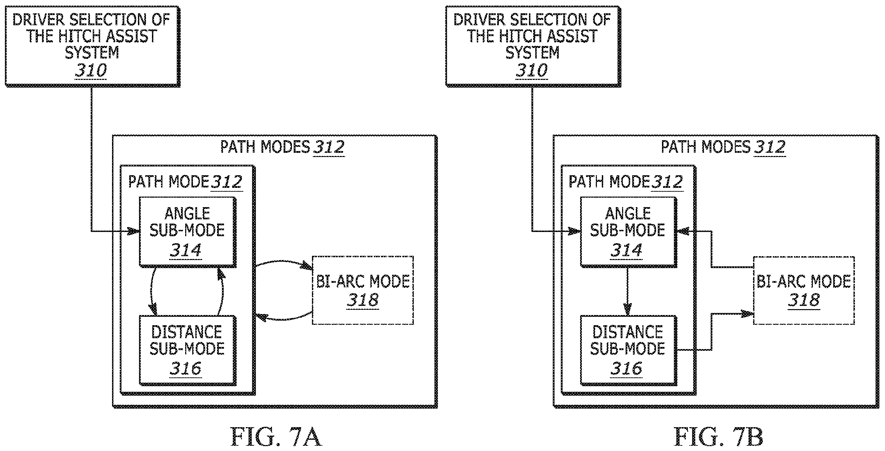

Referring to FIGS. 7A and 7B, in some examples, the angle sub-mode 314 and the distance sub-mode 316 are part of the arc-mode 312 (FIG. 7A), therefore, the operator first selects a mode 312, 318, and then selects the sub-mode within the selected mode 312, 318. As such, for examples, the display 142 may display an arc mode button 145 and a bi-arc mode button 145, that the operator can select from. FIG. 7B shows an example, where each sub-mode/mode 314, 316, 318 is independent. Therefore, a press or push of the button 145 rotates between the three modes 314, 316, 318.

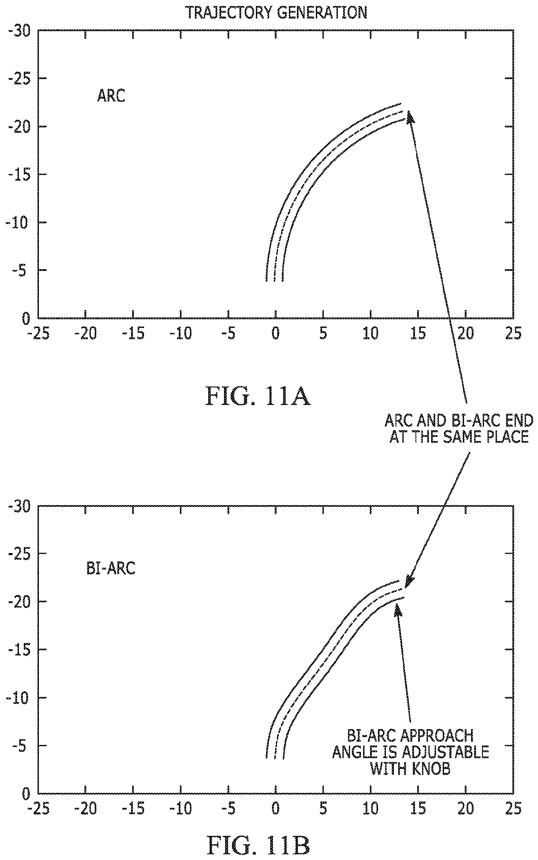

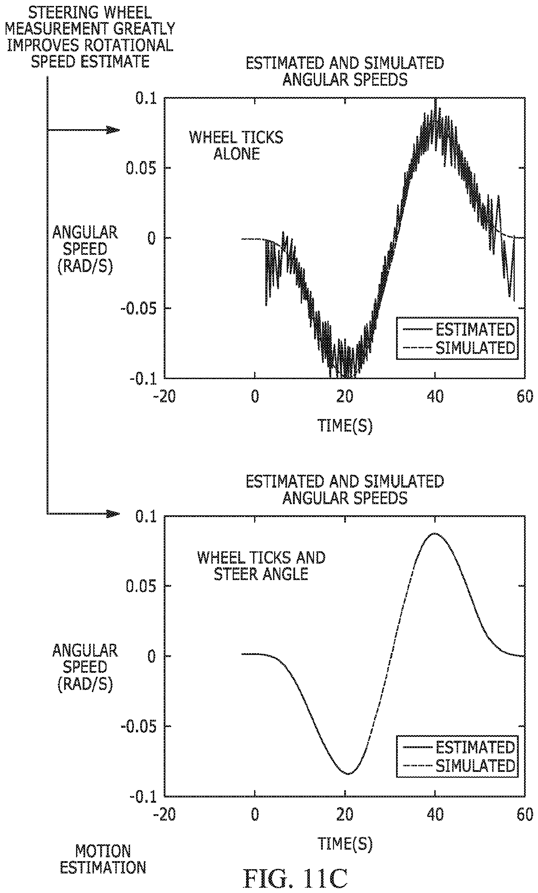

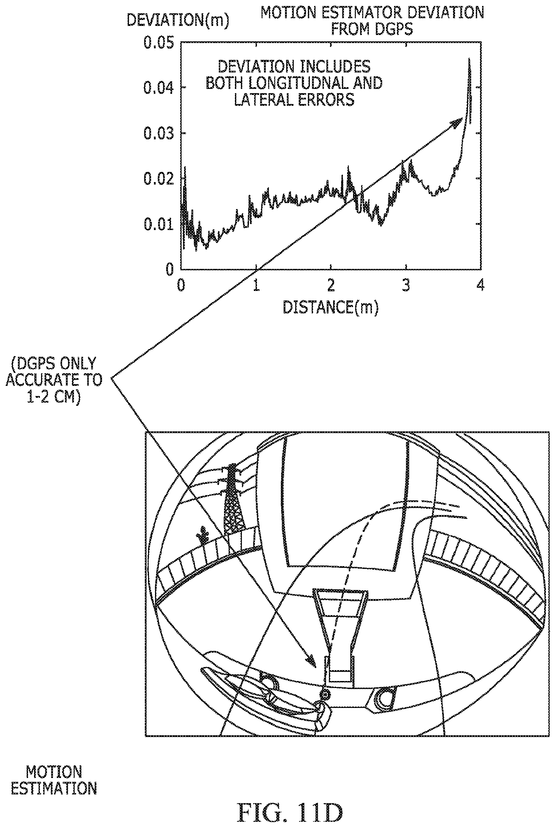

The angle sub-mode 314 is configured to adjust a curvature angle of the path 552 as shown in FIGS. 8A and 8B. Therefore, the operator can turn the knob 143 to the right causing the displayed path 552 to have a curvature to the right as shown in FIG. 8A. In addition, the operator my turn the knob 143 to the left causing the displayed path 552 to have a curvature to the left as shown in FIG. 8B. The distance sub-mode 316 is configured to adjust a length of the expected path 552 as shown in FIGS. 8A and 8B. For examples, referring to FIG. 8A, the operator can rotate the knob 143 to position a destination of the path 552 adjacent the trailer representation 138 in the image 143. Referring to FIG. 8B, the image 143 shows the path 552 having a shorter length than the path shown in FIG. 8A. Therefore, in this case, the operator may want that the tractor 100 to autonomously move few meters in the rearward direction R. The bi-arc mode 318 is configured to adjust an approach angle indicative of how the tractor 100 will be oriented with respect to the trailer 200 (or other object) at the end of the path 552 as shown in FIGS. 10A and 10B. For example, the bi-arc mode 318 aids the operator in aligning the tractor 100 with the trailer 200 such that the fore-aft axis Y of the tractor 100 is aligned with a fore-aft axis Y of the trailer 200, which helps the operator during the hitching process between the tractor 100 and the trailer 200. Referring to FIGS. 11A and 11B, the arc mode 312 and the bi-arc mode 318 both have the same end point; however, the bi-arc mode 318 allows for an adjustment of the approach angle towards the trailer 200. In some examples, when the operator switches to bi-arc mode 318, the trajectory generator 560 keeps the start and end locations the same. In the bi-arc mode 318, the operator may adjust only the approach angle to the trailer 200. The operator does not adjust the distance in the bi-arc mode 318. In some examples, the radius and length of the operator selected path 552 determine the final position of the tractor 100. The vehicle controller 150 uses Dubins path to determine the path 552 which is an optimal calculation.

In some implementations, where the bi-arc mode 318 is optional, if the operator is satisfied with the path 552 based on the arc mode 312 selection, then the operator may finalize the path 552 by pressing the button 145. Otherwise, the operator adjusts the knob 143 for the third time to change the shape of a bi-arc or other suitable path 552. This allows for adjusting the final approach angle to the trailer 200 or other object. Once the operator is satisfied with the choice of approach angle, he/she presses the button 145 to finalize the path choice.

In some implementations, the operator parks the tractor 100 in a location where the trailer 200, or other object or point of interest, is within a field of view of the rear camera 410 of the tractor 100. The engine of the tractor 100 may be idling, and the transmission in Park position. The operator may initiate the trajectory generator 560 by pressing the button 145 and/or making a selection on the display 142. In some examples, the display 142 shows a selectable option or button 145 allowing the operator to initiate the Arc mode 312. The trajectory generator 560 begins by executing the angle sub-mode 314 of the arc mode 312, as shown in FIGS. 7A and 7B. The operator switches to distance sub-mode 316 to adjust the distance of the path 552, by for example, pressing the button 145. In some examples, the operator may adjust the path 552 by switching between angle sub-mode 314 and distance sub-mode 316 and adjusting the path 552 until the desired path 552 is shown on the display. The operator adjusts the path 552 such that the outer boundaries 554 of the path 552 interest the trailer 200 (i.e., the trailer representation 138 within the image 143) or other point of interest.

In some implementations, the final approach angle to the trailer 200 or the point of interest is important, for example, for aligning the vehicle fore-aft axis Y with the trailer fore-aft axis Y. In this case, the operator may select or press the "Arc/Bi-Arc Mode" button 145 (displayed on the display 142) and switch to the bi-arc mode 318. In the bi-arc mode 318 the previously set endpoint of the path 552 stays constant, and the operator adjusts the final approach angle with the knob 143. When the operator is satisfied with the final approach angle and with the complete trajectory or path 552, the operator may confirm the selected path 552 by executing an action. In some examples, the operator switches the transmission to reverse which is indicative that the operator is satisfied with the displayed path 552. In some examples, the operator switches the transmission into reverse with the brake on, then releases the brake, and the tractor 100 follows the selected path 552. In some examples, while the vehicle is autonomously maneuvering in the rearward direction R along the path 552, the operator may stop the tractor 100 by, for example, pressing the brake. This causes the vehicle controller 150 to exit the hitch assist system 160.

In some implementations, the trajectory generator 560 sets the path distance at a default, which allows the operator to only adjust the steering angle until it intersects the trailer 200 or other point of interest.

In some implementation, the final approach angle is not adjusted. Instead, the final approach angle is always the same as the initial vehicle departure angle. So, the final vehicle fore-aft axis Y is parallel to the initial vehicle fore-aft axis Y. In this case, the operator adjusts the final location of the path 552 to interest with the trailer.

In some examples, while the tractor 100 is maneuvering in the rearward direction R along the path 552, the display 142 may show a progress of the tractor 100 along the path 552. For example, the display 142 may show an original trajectory projected on the ground, but updated by the vehicle's changing position. The display 142 may also show an indication of how well the vehicle is following this trajectory.

In some implementations, the trajectory generator 560 receives data from other vehicle systems to generate the path 552. In some examples, the trajectory generator 560 receive vehicle pose data defined by *(x, y, θ)* where x is the position of a center of the tractor 100 along the transverse axis X in and X-Y plane, y is the position of a center of the vehicle along the fore-aft axis Y in the X-Y plane, and *θ* is the heading of the tractor 100. In addition, the trajectory generator 560 may receive a position of the knob 143, e.g., a knob angle, from the knob 143. The trajectory generator 560 may also receive a mode button state (i.e., arc mode 312 or bi-arc mode 318), and the sub-mode button state (i.e., angle sub-mode 314 or distance sub-mode 316). Based on the received data, the trajectory generator 560 adjusts the path 552 and instructs the display 142 to display the path 552. In some examples, the path 552 includes outer boundaries 554 and a tow ball path 166 being the estimated path of the tow ball 122. The trajectory generator 560 may also instruct the display 142 to show the current mode or sub-mode status indicative of the mode/sub-mode the drive has selected to adjust the path 552.

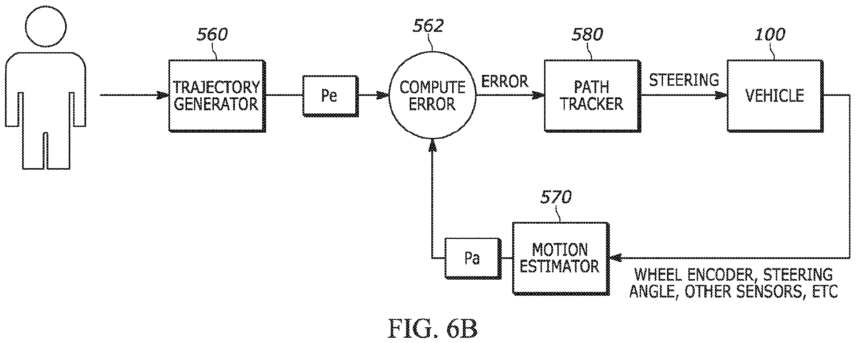

Referring back to FIGS. 6A and 6B, once the operator indicates via the user interface 140 that his path selection is complete, the vehicle controller 150 executes the operator assistance system 320 to follow the planned path 552. The operator assistance system 320 includes path following behaviors 330. The path following behaviors 330 receive the selected path 552 and executes one or more behaviors 330a-b that send commands 194 to the drive system 110, causing the tractor 100 to autonomously drive along the planned path 552. As the tractor 100 is autonomously maneuvering along the planned path 552, the hitch assist system 160 continuously updates the path 552 based on the motion estimator 570 and the path tracker as discussed below.

Referring back to FIGS. 6A and 6B, the motion estimator 570 determines a current position Pa of the tractor 100 as it is autonomously maneuvering in the rearward direction R along the path 552. As previously discussed, the trajectory generator 560 determines where the tractor 100 should be based on the planned path 552, i.e., estimated position Pe; therefore the motion estimator determines an actual position Pa of the tractor 100. In some examples, the motion estimator includes a motion estimation algorithm that outputs relative vehicle position and speed. For example, the motion estimation algorithm may include an Extended Kalman Filter (EKF). The EKF uses measurements, such as, but not limited to, encoders from 4 wheels (e.g., 96 ticks per revolution), and steering angle. The motion estimator 570 fuses the measurements to determine the actual position of the tractor 100. The motion estimator 570 may use bicycle model due to the slow speed of the tractor 100 as it is autonomously moving in the rearward direction. The bicycle model uses a single steered wheel in front to represent both front wheels, and it uses a single non-steered wheel in the rear to represent both rear wheels. The wheels are joined by a single rigid link. Motion is restricted to a two-dimensional horizontal ground plane. The inputs of the bicycle model are speed and steer angle, while its state is position and heading. The motion estimator 570 estimates linear and rotational speeds, and position (e.g., orientation of the vehicle). In some examples, the motion estimator 570 considers sensor data from the sensor system 400, for example, camera, radar, GPS measurement to improve any drift.

In some implementations, the motion estimator 570 uses an Extended Kalman Filter (EKF). The EKF equations are also provided below as equations (3) - (7). The state vector has nine elements shown in equation 1:

$$\mu = [x \; y \; \theta \; v \; \omega \; d_{lr} \; d_{rr} \; d_{lf} \; d_{rf}]^T \; . \qquad (1)$$

The first three are the "pose" of the vehicle, (x, y, θ). The next two are the linear and angular speeds, (v, ω). The final four are the distances traveled by the four tires, ($d_{lr}$, $d_{rr}$, $d_{lf}$, $d_{rf}$), left-rear, right-rear, left-front, right-front, respectively.

The complete measurement vector has five elements shown in equation 2:

$$z = [d_{lr} \; d_{rr} \; d_{lf} \; d_{rf} \; \phi]^T \; . \qquad (2)$$

The first four are, again, the distances traveled by the four tires, ($d_{lr}$, $d_{rr}$, $d_{lf}$, $d_{rf}$). The final element φ is the average front wheel angle (not the steering wheel angle but the average angle of the front tires with respect to the longitudinal axis). The motion estimator 570 provides a vehicle speed estimate. It is common to compute an approximate speed by dividing distance change by time change (Δd/Δt), however, this would be very noisy for the situation here, where there are relatively few wheel encoder counts, and the vehicle is moving relatively slowly. Thus, to avoid a direct calculation involving dividing distance change by time change (Δd/Δt), the motion estimator 570 estimates the vehicle linear speed v by using the EKF, based on the measured wheel accumulated distances, and there is no explicit rate calculation involving division.

The Extended Kalman Filter may be written as two Prediction equations and three Measurement equations. The Prediction equations are:

$$\overline{\mu}_t = g(u_t, \mu_{t-1}) \ , \tag{3}$$

$$\overline{\Sigma}_t = G_t \Sigma_{t-1} G_t^T + R_t \ . \tag{4}$$

Equation (3) provides an update to the state $\mu$. Equation (4) provides an update to the covariance $\Sigma$. The covariance provides an estimate of the current uncertainty of the states. The matrix R is the noise covariance for the state $\mu$.

The measurement update equations are:

$$K_t = \overline{\Sigma}_t H_t^T (H_t \overline{\Sigma}_t H_t^T + Q_T)^{-1} \ , \tag{5}$$

$$\mu_t = \overline{\mu}_t + K_t(z_t - h(\overline{\mu}_t)) \ , \tag{6}$$

$\Sigma_t = (I - K_t H_t)\overline{\Sigma}_t$ .(7)Equation (5) sets the value of the optimal Kalman gain K. Equation (6) provides an update to the state $\mu$. Equation (7) provides an update to the covariance $\Sigma$. The matrix Q is the noise covariance for the measurement z.

For prediction the nonlinear vector function g needs to be defined. The matrix G is the derivative of this vector function. For convenience, it will be provided as well. The vector function g is given by:

$$g(\mu) = \mu + \begin{bmatrix} (v\cos\theta)\Delta t \\ (v\sin\theta)\Delta t \\ \omega\Delta t \\ 0 \\ 0 \\ (v - w\omega/2)\Delta t \\ (v + w\omega/2)\Delta t \\ -\Delta t\sqrt{(l\omega)^2 + (v - w\omega/2)^2} \\ -\Delta t\sqrt{(l\omega)^2 + (v + w\omega/2)^2} \end{bmatrix} \ . \tag{8}$$

Here, w is the "track width" of the vehicle. More specifically, it is the lateral distance from the center of a left tire to the center of a right tire. It is assumed that the front and rear distances between tires are the same. The wheelbase is denoted by l. Note that in the last two elements, there is a minus sign where expressions are subtracted from $d_{lf}$ and $d_{rf}$. This minus sign assumes backward motion. Thus, this prediction equation could not be used for forward motion. However, if there were some measurement of the direction of the vehicle (forward or backward), then it would be a simple matter to change the sign of the last two elements (positive for forward, negative for backward) to make the equations valid for both forward and backward directions.

The matrix G has nine rows and nine columns. Let

$$G = I + \overline{G}\Delta t \ . \tag{9}$$

I is the 9×9 identity matrix. Then,

$$\overline{G}_{13} = -(v\sin\theta), \overline{G}_{14} = (\cos\theta)$$
$$\overline{G}_{23} = (v\cos\theta), \overline{G}_{24} = (\sin\theta)$$
$$\overline{G}_{35} = 1$$
$$\overline{G}_{64} = 1, \overline{G}_{65} = -(w/2)$$
$$\overline{G}_{74} = 1, \overline{G}_{75} = (w/2)$$
$$\overline{G}_{84} = -\frac{v - w\omega/2}{\sqrt{(l\omega)^2 + (v - w\omega/2)^2}}, \overline{G}_{85} = -\frac{-(w/2)(v - w\omega/2) + l^2\omega}{\sqrt{(l\omega)^2 + (v - w\omega/2)^2}}$$
$$\overline{G}_{94} = -\frac{v + w\omega/2}{\sqrt{(l\omega)^2 + (v + w\omega/2)^2}}, \overline{G}_{95} = -\frac{(w/2)(v + w\omega/2) + l^2\omega}{\sqrt{(l\omega)^2 + (v + w\omega/2)^2}}$$

$$(10)$$

All other elements are zero.

The complete update assumes measurements of the wheel ticks and the wheel angle are all available at the same time. If only the wheel ticks are available, then they may be incorporated separately, and if only the wheel angle is available, it may be incorporated separately. For the complete update, the vector h is defined. The matrix H is the derivative of this vector function. For convenience, it will be provided as well. The vector function h is given by:

$$h(\mu) = \begin{bmatrix} d_{lr} \\ d_{rr} \\ d_{lf} \\ d_{rf} \\ \tan^{-1}(l\omega/v) \end{bmatrix}, v \neq 0 .$$

$$(11)$$

The H matrix is the derivative of h and is 5×9. The non-zero elements are

$$H_{11} = H_{22} = H_{33} = H_{44} = 1$$
$$H_{54} = -l\omega/(v^2 + l^2\omega^2), H_{55} = lv/(v^2 + l^2\omega^2), v^2 + l^2\omega^2 \neq 0$$

Note that certain quantities, $h_5$, $H_{54}$, $H_{55}$, involve divisors which could easily be zero. Thus, implementation requires testing that these divisors are not zero before performing the divisions.

A measurement consisting of wheel ticks alone can be accommodated, as can a measurement consisting of steering angle alone. However, these variations are not included because they are straightforward, given the information that has been provided.

During the vehicle's autonomous maneuvering in the rearward direction R along the planned path 552, the trajectory generator 560 determines where the tractor 100 should be based on the planned path 552, i.e., estimated position Pe; while the motion estimator 570 determines an actual position Pa of the tractor 100; therefore the path tracker 580 determines an error 562 based on the estimated position Pe and the actual position Pa. The path tracker 580 adjusts the vehicle's current position Pa based on the error 562 such that the tractor 100 continues to follow the planned path 552.

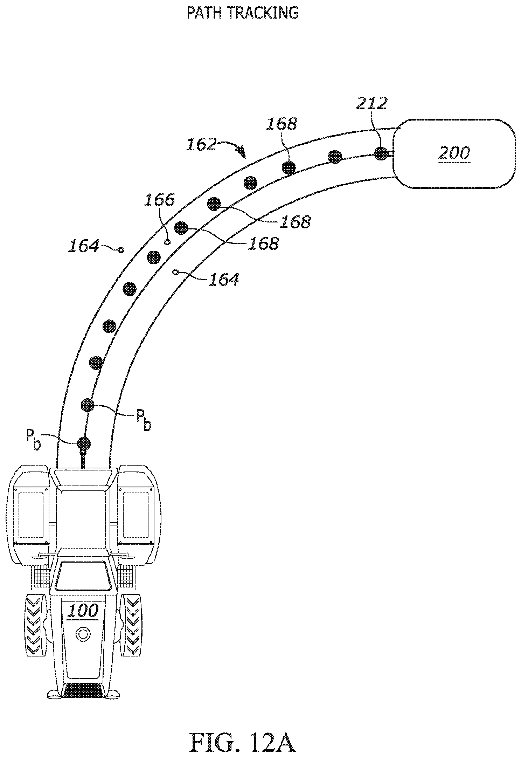

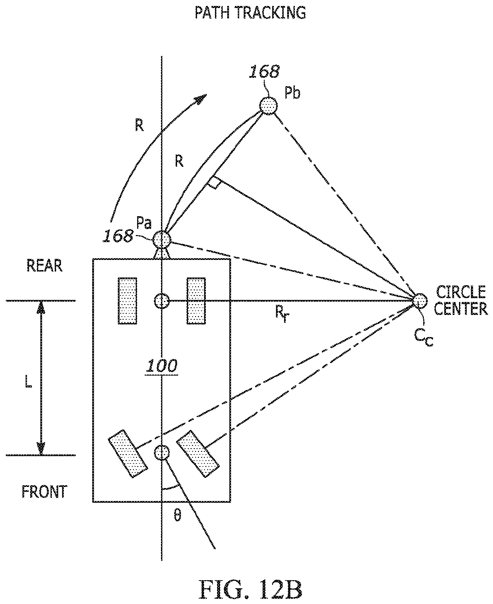

Referring to FIGS. 12A-12D, in some implementations, the path tracker 580 executes a pure pursuit approach to keep the tractor 100 on the planned path 552. The operator selected path 552 is sampled at predefined intervals of time, for examples, every minute, to produce a plurality of waypoints 168 positioned along the tow ball path 166 of the planned path 552. The path tracker 580 (e.g., algorithm) compares a current tow-ball position and heading Pa received from the motion estimator 570 with the next waypoint position Pb. The vehicle hitch assist system 160 constantly adjusted the vehicle steering toward the current waypoint Pb, i.e., the waypoint that the vehicle is driving towards. The path tracker 580 allows the vehicle tow-ball 122 to track each waypoint 168. In other words, the path tracker 580 allows for the tow-ball 122 to go to each waypoint along the tow ball path 166. In some examples, the waypoint 168 is transformed into vehicle coordinates from world coordinates. For example, the path tracker 580 calculates a center Cc of a turning circle based on the tow-ball position Pa and the waypoint position Pb. Then the path tracker 580 calculates a vehicle turning radius Rr based on the center of the turning circle. Finally, the path tracker 580 calculates a steering angle based on the center of turning circle using Ackermann angle. In other words, the path tracker 580 compares an estimated location Pe with the current location Pa to make sure the vehicle is following the path and determines a next waypoint Pb and determines or adjusts the path from the current vehicle position and heading to the next or subsequent waypoint Pb. Thus the path tracker 580 maintains that the tractor 100 autonomously maneuvers along the planned path and adjusts the vehicle's behavior or driving when the tractor 100 veers from the planned path.

In some examples, the controller includes an object detection system (not shown) that identifies one or more objects along the planned path 552. In this case, the hitch assist system 160 adjusts the path 552 to avoid the detected one or more objects. In some examples, the hitch assist system 160 determines a probability of collision and if the probability of collision exceeds a predetermined threshold, the hitch assist system 160 adjusts the path 552 and sends it to the operator assistance system 320.

Once the operator indicated that the selected path 552 is entered, then the vehicle controller 150 executes a operator assistance system 320, which in turn includes path following behaviors 330. The path following behaviors 330 receive the selected path 552 and executes one or more behaviors 330a-b that send commands 194 to the drive system 110, causing the tractor 100 to autonomously drive along the planned path in the rearward direction R.

The path following behaviors 330a-b may include one or more behaviors, such as, but not limited to, a braking behavior 330a, a speed behavior 330b, and a steering behavior 330c. Each behavior 330a-b causes the tractor 100 to take an action, such as driving backward, turning at a specific angle, breaking, speeding, slowing down, among others. The vehicle controller 150 may maneuver the tractor 100 in any direction across the road surface by controlling the drive system 110, more specifically by issuing commands 194 to the drive system 110.

The braking behavior 330a may be executed to either stop the tractor 100 or to slow down the tractor 100 based on the planned path. The braking behavior 330a sends a signal or command 194 to the drive system 110, e.g., the brake system (not shown), to either stop the tractor 100 or reduce the speed of the tractor 100.

The speed behavior 330b may be executed to change the speed of the tractor 100 by either accelerating or decelerating based on the planned path 552. The speed behavior 330b sends a signal or command 194 to the brake system 120 for decelerating or the acceleration system 1320 for accelerating.

The steering behavior 330c may be executed to change the direction of the tractor 100 based on the planned path 552. As such, the steering behavior 330c sends the acceleration system 140 a signal or command 194 indicative of an angle of steering causing the drive system 110 to change direction.

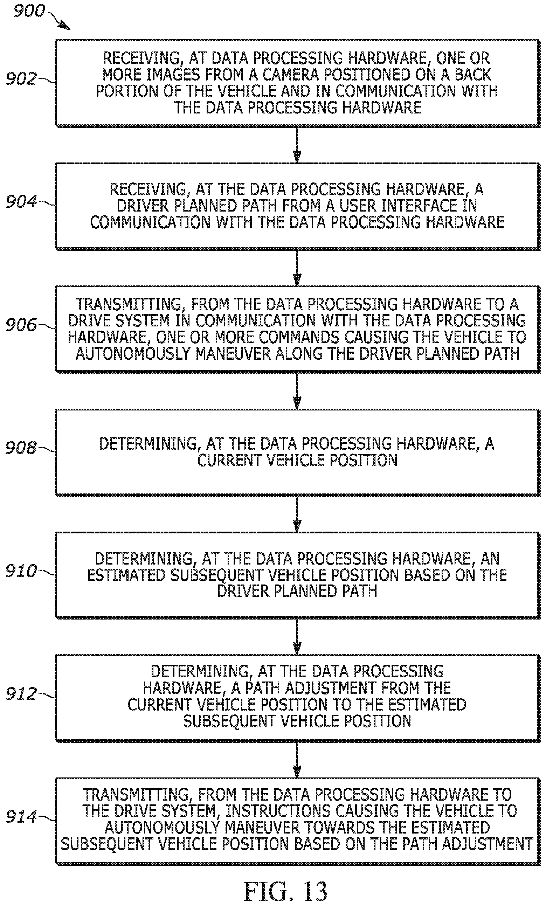

FIG. 13 illustrates an example arrangement of operations for a method 800 of autonomously maneuvering a tractor 100 (as shown in FIGS. 1-12D) towards a selected trailer 200, 200a. At block 802, the method 800 includes initiating a hitch assist mode by receiving an indication that a operator wants to autonomously hitch the tractor 100 to a trailer 200, 200a. The indication may be by way of a selection on the user interface 140 of the tractor 100, putting the tractor in reverse (without reversing), or any other indication. At block 804, the DNN 500 detects and locates one or more trailers 200, 200a-c behind the tractor 100 and displays by way of the user interface 140 trailer representations 146, 146a-c associated with the one or more identified trailers 200, 200a-c respectively. Alternatively, the camera image is shown on the display142. At decision block 806, the method 800 waits for a operator selection 144. The operator may select from the displayed image by choosing a from the one or more trailer representations 146, 146a-c on the display or by manipulating a user input knob 143 until a path representation, i.e. path tracker 480, is aligned with a point of interest, i.e. the trailer representation 146 including the hitch image position, on the displayed image. When the operator selects a trailer representation 146, 146a-c associated with a selected trailer 200a, at block 808, the method 800 includes planning a tractor path 552, from an initial position $P_I$ of the tractor 100 to a final position $P_F$ with respect to the selected trailer 200. In some examples, the path planning system 550, 550a, 550b plans the path 552. The path planning system 550, 550a, 550b may be part of the controller 300 or part of the DNN 500. At block 810, the method 800 includes executing the path following sub-system 320. At decision block 812, the method 800 determines if the tractor 100 is within a predetermined distance from the selected trailer 200a, i.e., the method 800 determines if the tractor 100 has reached the intermediate position $P_M$. When the tractor 100 reaches the intermediate position $P_M$, the method 800 at decision block 812 determines a relative height $H_R$ between a top portion of the tractor hitch coupler 162 of the tractor 100 and a bottom portion of the hitch coupler 212 of the selected trailer 200a and determines if the hitch coupler 212 can releasably receive the tractor hitch couler 162 based on the relative height $H_R$. In other words, the method 800 determines if the relative height $H_R$ equals to zero. If the relative height $H_R$ is not equal to zero, then at block 816, the method 800 adjusts the suspension of the tractor 100 and then determines the relative height $H_R$ and checks if the relative height $H_R$ equals zero at block 814. Once relative height $H_R$ is equal to zero, then the method 800 at block 818 continues maneuvering about the path 552 from the intermediate position $P_M$ to a final position $P_F$ connecting the tractor hitch coupler162 of the tractor 100 with the hitch coupler 212 of the selected trailer 200a.

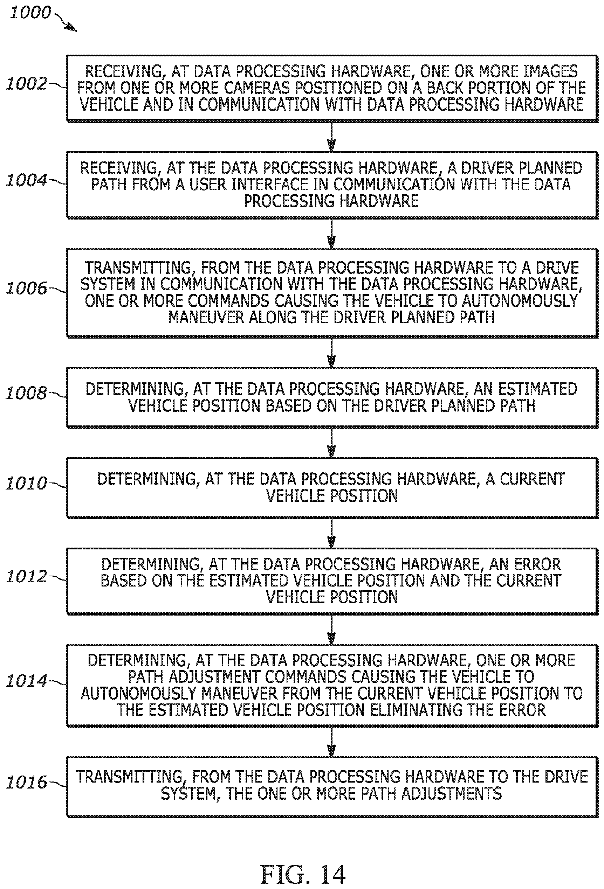

FIG. 14 provides an example arrangement of operations of a method 900 for autonomously maneuvering a tractor 100 (e.g., a tow vehicle) in a rearward direction R towards a point of interest, such as a trailer 200, using the system described in FIGS. 1-8B. At block 902, the method 900 includes, receiving, at data processing hardware 152, one or more images 143 from a camera 142 positioned on a back portion of the tractor 100 and in communication with the data processing hardware 152. At block 904, the method 900 includes receiving, at the data processing hardware 152, a operator planned path 162 from a user interface 130 in communication with the data processing hardware 152. The operator planned path 162 includes a plurality of waypoints 168. At block 906, the method 900 includes transmitting, from the data processing hardware 152 to a drive system 110 in communication with the data processing hardware 152, one or more commands 161, 194 causing the tractor 100 to autonomously maneuver along the operator planned path 162. At block 908, the method 900 includes determining, at the data processing hardware 152, a current vehicle position Pa. At block 910, the method 900 includes determining, at the data processing hardware 152, an estimated subsequent vehicle position based on the operator planned path, the estimated subsequent vehicle position being at a subsequent waypoint Pb along the operator planned path 162 from the current vehicle position Pa. At block 912, the method 900 includes determining, at the data processing hardware 152, a path adjustment from the current vehicle position Pa to the estimated subsequent vehicle position Pb. At block 914, the method 900 includes transmitting, from the data processing hardware 152 to the drive system 110, instructions causing the tractor 100 to autonomously maneuver towards the estimated subsequent vehicle position Pb based on the path adjustment.

FIG. 10 provides an example arrangement of operations of another method 1000 for autonomously maneuvering a tractor 100 (e.g., a tow vehicle) in a rearward direction R towards a point of interest, such as a trailer 200, using the system described in FIGS. 1-8B. At block 1002, the method 1000 includes receiving, at data processing hardware 152, one or more images 143 from one or more cameras 142 positioned on a back portion of the tractor 100 and in communication with the data processing hardware 152. At block 1004, the method 1000 includes receiving, at the data processing hardware 152, a operator planned path 162 from a user interface 130 in communication with the data processing hardware 152. At block 1006, the method 1000 includes transmitting, from the data processing hardware 152 to a drive system 110 in communication with the data processing hardware 152, one or more commands causing the tractor 100 to autonomously maneuver along the operator planned path 162. At block 1008, the method 1000 includes determining, at the data processing hardware 152, an estimated vehicle position Pe based on the operator planned path 162. At block 1010, the method 1000 includes determining, at the data processing hardware 152, a current vehicle position Pa. At block 1012, the method 1000 includes determining, at the data processing hardware 152, an error 184 based on the estimated vehicle position Pe and the current vehicle position Pa. At block 1014, the method 1000 includes determining, at the data processing hardware 152, one or more path adjustment commands causing the tractor 100 to autonomously maneuver from the current vehicle position Pa to the estimated vehicle position Pe eliminating the error 184. At block 1016, the method 1000 includes transmitting, from the data processing hardware 152 to the drive system 110, the one or more path adjustment commands.

In some examples, the method 900, 1000 includes ing a path on the one or more images 143 and receiving a command by way of the user interface 130 in communication with the data processing hardware 152. The command includes instructions to adjust the path as the operator planned path 162. In some examples, the command includes instructions to adjust a distance of the path. The command may include instructions to adjust an angle of the path and or instructions to adjust an angle of an end portion of the path.

In some implementations, determining the current vehicle position includes receiving wheel encoder sensor data 145 associated with one or more wheels 112 and receiving steering angle sensor data 145. The current vehicle position Pa is based on the wheel encoder sensor data 145 and the steering angle sensor data 145.

As previously discussed, the proposed algorithm is designed to work in real time in a standard CPU with or without the use of GPU, graphic accelerators, training, or FPGAs. In addition, the proposed approach provides an automated method that only needs initial input from the operator. In addition, the described system provides a compromise between providing guidelines for the operator and automating all rearward functions.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Implementations of the subject matter and the functional operations described in this specification can be implemented in digital electronic circuitry, or in computer software, firmware, or hardware, including the structures disclosed in this specification and their structural equivalents, or in combinations of one or more of them. Moreover, subject matter described in this specification can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The terms "data processing apparatus", "computing device" and "computing processor" encompass all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

Similarly, while operations are depicted in the drawings in a particular order, this should not be understood as requiring that such operations be performed in the particular order shown or in sequential order, or that all illustrated operations be performed, to achieve desirable results. In certain circumstances, multi-tasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

A number of implementations have been described. Nevertheless, it will be understood that various modifications may be made without departing from the scope of the following claims.

## Claims

1. A method of maneuvering a tractor (100) in reverse for attachment to a trailer (200, 200a-c) using a hitch assist system (310), the method comprising:

    entering a hitch assist mode;
    displaying a camera image on a user interface (140), wherein the displayed image shows at least one trailer (200, 200a-c);
    selecting a trailer (200, 200a-c);
    receiving, at the user interface (140) in communication an indication of a selected trailer (200, 200a-c);
    determining with a computing device (302) a tractor path (552) from an initial position ($P_I$) to a final position ($P_F$) adjacent the trailer (200, 200a-c), the tractor path (552) comprising maneuvers configured to move the tractor (100) along the tractor path (552) from the initial (Pi) position to the final position ($P_F$); and
    autonomously following, at a drive system (110) in communication with the computing device (302), the tractor path (552) from the initial position (Pi) to the final position ($P_F$),
    wherein displaying on the user interface (140) further comprises receiving, at a controller (300), one or more images from one or more cameras (410) positioned on a back portion of the tractor (100) and in communication with the controller (300), and overlaying on the displayed camera image, at the controller (300), a path representation indicative of an expected path the tractor (100) drives along, the expected path starting at a tractor hitch (160),
    and wherein selecting the trailer (200, 200a-c) further comprises receiving, at the controller (300), a first command by way of the user interface (140), the first command indicative of a change in the path representation such that the path representation ends at a point of interest, and adjusting, at the controller (300), the path representation based on the first command and wherein the path planning is completed by the controller (300) for the hitch assist system (310).

2. The method of claim 1, wherein displaying on the user interface (140) includes displaying more than one trailer (200, 200a-c), and wherein selecting the trailer (200, 200a-c) includes selecting an image representation of a desired trailer (200, 200a-c), and wherein the path planning is completed by a deep neural network (500).

3. The method of claim 2, further comprising:

    continuously detecting, at the neural network (500), one or more objects within the tractor path (552) as the tractor (100) is moving along the tractor path (552); and
when detecting an object, altering the tractor path (552) at the computing device (302).

4. The method of claim 2, wherein detecting one or more trailers (200, 200a-c) comprises:

capturing, at one or more imaging devices in communication with the neural network (500), one or more images, at least one of the one or more imaging devices (410) positioned on a back side of the trailer (100) facing a rearward direction (R); and
determining, at the neural network (500), the one or more trailers (200, 200a-c) within the one or more images.

5. The method of claim 1 further comprising:

stopping or halting, at the drive system (110), the tractor (100) at an intermediate position ($P_M$) before reaching the final position ($P_F$), the intermediate position ($P_M$) being closer to the final position ($P_F$) than the initial position ($P_I$);
modifying, at the drive system (110), one or more tractor suspensions associated with the tractor (100) to align a tractor hitch (160) with a trailer hitch (210);
autonomously following, at the drive system (110), the tractor path from the intermediate position ($P_M$) to the final position ($P_F$); and
connecting, at the drive system (110), the tractor hitch (160) with the trailer hitch (210).

6. The method of claim 1, wherein connecting a tractor hitch (160) with a trailer hitch (210) comprises modifying one or more tractor suspensions associated with the tractor (100) to align the tractor hitch (160) with the trailer hitch (210).

7. A system for autonomously driving a tractor (100) in a rearward direction (R) towards a point of interest, the system comprising:

data processing hardware (152) in communication; and
memory hardware in communication with the data processing hardware (152), the memory hardware storing instructions that when executed on the data processing hardware (152) cause the data processing hardware (152) to perform operations comprising:

receiving one or more images from a camera (410) positioned on a back portion of the tractor (100) and in communication with the data processing hardware (152);
displaying, on a user interface (140), the one or more images;
receiving an operator planned path from the user interface (140) in communication with the data processing hardware (152), the operator planned path comprising a plurality of waypoints (168);
transmitting to a drive system (110) in communication with the data processing hardware (152), one or more commands causing the tractor (100) to autonomously maneuver along the operator planned path;
determining a current tractor position;
determining an estimated subsequent tractor position based on the operator planned path, the estimated subsequent tractor position being at a subsequent waypoint (Pb) along the operator planned path from the current tractor position;
determining a path adjustment from the current tractor position to the estimated subsequent tractor position; and
transmitting to the drive system (110), instructions causing the tractor (100) to autonomously maneuver towards the estimated subsequent tractor position based on the path adjustment,
wherein the operations further comprise:

overlaying a path on the one or more images; and
receiving a command by way of the user interface (140) in communication with the data processing hardware (152), the command including instructions to adjust the overlayed path as the operator planned path.

8. The system of claim 7, wherein the command includes instructions to adjust a distance of the path.

9. The system of claim 7, wherein the command includes instructions to adjust an angle of the path.

**10.** The system of claim 7, wherein the command includes instructions to adjust an angle of an end portion of the path.

**11.** The system of claim 7, wherein determining the current tractor position comprises:

receiving wheel encoder sensor data associated with one or more wheels (112);
receiving steering angle sensor data; and
wherein the current tractor position is based on the wheel encoder sensor data and the steering angle sensor data.

**Patentansprüche**

**1.** Verfahren zum Manövrieren eines Traktors (100) im Rückwärtsgang zum Anhängen an einen Anhänger (200, 200a-c) unter Verwendung eines Kupplungsassistenzsystems (310), wobei das Verfahren umfasst:

Eintreten in einen Kupplungsassistenzmodus;
Anzeigen eines Kamerabildes auf einer Benutzerschnittstelle (140), wobei das angezeigte Bild mindestens einen Anhänger (200, 200a-c) zeigt;
Auswählen eines Anhängers (200, 200a-c);
Empfangen eines Hinweises auf einen ausgewählten Anhänger (200, 200a-c) an der Benutzerschnittstelle (140) in Kommunikation;
Bestimmen eines Traktorpfades (552) mit einer Rechenvorrichtung (302) von einer Anfangsposition ($P_I$) zu einer Endposition ($P_F$) neben dem Anhänger (200, 200a-c), wobei der Traktorpfad (552) Manöver umfasst, die ausgebildet sind, den Traktor (100) entlang des Traktorpfades (552) von der Anfangsposition ($P_I$) zu der Endposition ($P_F$) zu bewegen; und
autonomes Verfolgen des Traktorpfades (552) von der Anfangsposition ($P_I$) zur Endposition ($P_F$) durch ein Fahrsystem (110), das mit der Rechenvorrichtung (302) in Kommunikation steht,
wobei das Anzeigen auf der Benutzerschnittstelle (140) ferner durch eine Steuereinheit (300) erfolgendes Empfangen eines oder mehrerer Bilder von einer oder mehreren Kameras (410), die an einem hinteren Abschnitt des Traktors (100) positioniert sind und mit der Steuereinheit (300) in Kommunikation stehen, und
durch die Steuereinheit (300) erfolgendes Überlagern des angezeigten Kamerabildes mit einer Pfaddarstellung umfasst, die einen erwarteten Pfad angibt, den der Traktor (100) entlangfährt, wobei der erwartete Pfad an einer Traktorkupplung (160) beginnt,
und wobei das Auswählen des Anhängers (200, 200a-c) ferner durch die Steuereinheit (300) erfolgendes Empfangen eines ersten Befehls über die Benutzerschnittstelle (140), wobei der erste Befehl eine Änderung der Pfaddarstellung derart anzeigt, dass die Pfaddarstellung an einem interessierenden Punkt endet, und durch die Steuereinheit (300) erfolgendes Anpassen der Pfaddarstellung auf Grundlage des ersten Befehls umfasst, und wobei die Pfadplanung durch die Steuereinheit (300) für das Kupplungsassistenzsystem (310) abgeschlossen wird.

**2.** Verfahren nach Anspruch 1, wobei das Anzeigen auf der Benutzerschnittstelle (140) Anzeigen von mehr als einem Anhänger (200, 200a-c) umfasst, und wobei das Auswählen des Anhängers (200, 200a-c) Auswählen einer Bilddarstellung eines gewünschten Anhängers (200, 200a-c) umfasst, und wobei die Pfadplanung durch ein tiefes neuronales Netz (500) abgeschlossen wird.

**3.** Verfahren nach Anspruch 2, ferner umfassend:

kontinuierliches Erkennen eines oder mehrerer Objekte innerhalb des Traktorpfades (552) durch das neuronale Netz (500), während sich der Traktor (100) entlang des Traktorpfades (552) bewegt; und
bei Erkennen eines Objekts Ändern des Traktorpfades (552) an der Rechenvorrichtung (302).

**4.** Verfahren nach Anspruch 2, wobei das Erkennen eines oder mehrerer Anhänger (200, 200a-c) umfasst:

Aufnehmen eines oder mehrerer Bilder an einer oder mehreren Bildgebungsvorrichtungen, die mit dem neuronalen Netz (500) in Kommunikation stehen, wobei mindestens eine der einen oder der mehreren Bildgebungsvorrichtungen (410) auf einer Rückseite des Anhängers (100) positioniert ist, die in eine Rückwärtsrichtung (R) weist; und
Bestimmen des einen oder der mehreren Anhänger (200, 200a-c) innerhalb des einen oder der mehreren Bilder durch das neuronale Netz (500).

**5.** Verfahren nach Anspruch 1, ferner umfassend:

Stoppen oder Anhalten des Traktors (100) durch das Fahrsystem (110) in einer Zwischenposition ($P_M$) vor Erreichen der Endposition ($P_F$), wobei die Zwischenposition ($P_M$) näher an der Endposition ($P_F$) liegt als die Anfangsposition ($P_I$);
Modifizieren einer oder mehrerer zu dem Traktor (100) gehörenden Traktoraufhängungen durch das Fahrsystem (110), um eine Traktorkupplung (160) mit einer Anhängerkupplung (210) auszurichten;
autonomes Verfolgen des Traktorpfades durch das Fahrsystem (110) von der Zwischenposition ($P_M$) zur Endposition ($P_F$); und
Verbinden der Traktorkupplung (160) mit der Anhängerkupplung (210) durch das Fahrsystem (110).

**6.** Verfahren nach Anspruch 1, wobei das Verbinden einer Traktorkupplung (160) mit einer Anhängerkupplung (210) Modifizieren einer oder mehrerer zu dem Traktor (100) gehörenden Traktoraufhängungen umfasst, um die Traktorkupplung (160) mit der Anhängerkupplung (210) auszurichten.

**7.** System zum autonomen Fahren eines Traktors (100) in einer Rückwärtsrichtung (R) zu einem interessierenden Punkt, wobei das System umfasst:

Datenverarbeitungshardware (152) in Kommunikation; und
Speicherhardware in Kommunikation mit der Datenverarbeitungshardware (152), wobei die Speicherhardware Anweisungen enthält, die bei Ausführung auf der Datenverarbeitungshardware (152) die Datenverarbeitungshardware (152) veranlassen, Arbeitsschritte durchzuführen, die umfassen:

Empfangen eines oder mehrerer Bilder von einer Kamera (410), die an einem hinteren Abschnitt des Traktors (100) positioniert ist und mit der Datenverarbeitungshardware (152) in Kommunikation steht;
Anzeigen des einen oder der mehreren Bilder auf einer Benutzerschnittstelle (140);
Empfangen eines von einem Bediener geplanten Pfades von der Benutzerschnittstelle (140) in Kommunikation mit der Datenverarbeitungshardware (152), wobei der vom Bediener geplante Pfad eine Vielzahl von Wegpunkten (168) aufweist;
Übertragen eines oder mehrerer Befehle an ein Fahrsystem (110) in Kommunikation mit der Datenverarbeitungshardware (152), die den Traktor (100) veranlassen, autonom entlang des vom Fahrer geplanten Pfades zu manövrieren; Bestimmen einer aktuellen Traktorposition;
Bestimmen einer geschätzten nachfolgenden Traktorposition auf Grundlage des vom Bediener geplanten Pfades, wobei die geschätzte nachfolgende Traktorposition an einem nachfolgenden Wegpunkt (Pb) entlang des vom Bediener geplanten Pfades von der aktuellen Traktorposition aus liegt;
Bestimmen einer Pfadanpassung von der aktuellen Traktorposition zu der geschätzten nachfolgenden Traktorposition; und
Übertragen von Anweisungen an das Fahrsystem (110), die den Traktor (100) veranlassen, auf Grundlage der Pfadanpassung autonom zu der geschätzten nachfolgenden Traktorposition zu manövrieren,
wobei die Arbeitsschritte ferner umfassen:

Einblenden eines Pfades in das eine oder die mehreren Bilder; und
Empfangen eines Befehls über die Benutzerschnittstelle (140) in Kommunikation mit der Datenverarbeitungshardware (152), wobei der Befehl Anweisungen enthält, um den eingeblendeten Pfad als den vom Bediener geplanten Pfad einzustellen.

**8.** System nach Anspruch 7, wobei der Befehl Anweisungen zum Anpassen einer Strecke des Pfades enthält.

**9.** System nach Anspruch 7, wobei der Befehl Anweisungen zum Anpassen eines Winkels des Pfades enthält.

**10.** System nach Anspruch 7, wobei der Befehl Anweisungen zum Anpassen eines Winkels eines Endabschnitts des Pfades enthält.

**11.** System nach Anspruch 7, wobei das Bestimmen der aktuellen Traktorposition umfasst:

Empfangen von Raddrehgeber-Sensordaten in Verbindung mit einem oder mehreren Rädern (112);
Empfangen von Lenkwinkelsensordaten; und
wobei die aktuelle Traktorposition auf den Raddrehgeber-Sensordaten und den Lenkwinkelsensordaten basiert.

**Revendications**

1. Procédé de manoeuvre d'un tracteur (100) en marche arrière pour l'attacher à une remorque (200, 200a-c) au moyen d'un système d'assistance à l'attelage (310), le procédé comprenant les étapes suivantes :

   passer dans un mode d'assistance à l'attelage ;
   afficher une image de caméra sur une interface utilisateur (140), l'image affichée montrant au moins une remorque (200, 200a-c) ;
   sélectionner une remorque (200, 200a-c) ;
   recevoir, sur l'interface utilisateur (140) en communication, une indication de la remorque sélectionnée (200, 200a-c) ;
   déterminer, à l'aide d'un dispositif informatique (302), une trajectoire du tracteur (552) d'une position initiale ($P_I$) à une position finale ($P_F$) adjacente à la remorque (200, 200a-c), la trajectoire du tracteur (552) comprenant des manoeuvres configurées pour déplacer le tracteur (100) le long de la trajectoire du tracteur (552) de la position initiale ($P_I$) à la position finale ($P_F$) ; et
   suivre de manière autonome, au niveau d'un système d'entraînement (110) en communication avec le dispositif informatique (302), la trajectoire du tracteur (552) de la position initiale ($P_I$) à la position finale ($P_F$),
   dans lequel l'affichage sur l'interface utilisateur (140) comprend en outre la réception, au niveau d'un contrôleur (300), d'une ou plusieurs images provenant d'une ou plusieurs caméras (410) positionnées sur une partie arrière du tracteur (100) et en communication avec le contrôleur (300), et la superposition sur l'image de la caméra affichée, au niveau du contrôleur (300), d'une représentation de la trajectoire indicative de la trajectoire prévue du tracteur (100), la trajectoire prévue commençant à un attelage du tracteur (160),
   et dans lequel la sélection de la remorque (200, 200a-c) comprend en outre la réception, au niveau du contrôleur (300), d'une première commande par le biais de l'interface utilisateur (140), la première commande indiquant un changement dans la représentation de la trajectoire de sorte que la représentation de la trajectoire se termine à un point d'intérêt, et l'ajustement, au niveau du contrôleur (300), de la représentation de la trajectoire sur la base de la première commande, et dans lequel la planification de la trajectoire est achevée par le contrôleur (300) pour le système d'assistance à l'attelage (310).

2. Procédé selon la revendication 1, dans lequel l'affichage sur l'interface utilisateur (140) comprend l'affichage de plus d'une remorque (200, 200a-c), et dans lequel la sélection de la remorque (200, 200a-c) comprend la sélection d'une représentation d'image d'une remorque souhaitée (200, 200a-c), et dans lequel la planification de la trajectoire est achevée par un réseau neuronal profond (500).

3. Procédé selon la revendication 2, comprenant en outre les étapes suivantes :

   détecter en continu, au niveau du réseau neuronal (500), un ou plusieurs objets dans la trajectoire du tracteur (552) lorsque le tracteur (100) se déplace le long de la trajectoire du tracteur (552) ; et
   lors de la détection d'un objet, modifier la trajectoire du tracteur (552) au niveau du dispositif informatique (302).

4. Procédé selon la revendication 2, dans lequel la détection d'une ou plusieurs remorques (200, 200a-c) comprend les étapes suivantes :

   capturer, au niveau d'un ou plusieurs dispositifs d'imagerie en communication avec le réseau neuronal (500), une ou plusieurs images, au moins un des un ou plusieurs dispositifs d'imagerie (410) étant positionné sur une face arrière de la remorque (100) orientée vers l'arrière (R) ; et
   déterminer, au niveau du réseau neuronal (500), les une ou plusieurs remorques (200, 200a-c) dans les une ou plusieurs images.

5. Procédé selon la revendication 1, comprenant en outre les étapes suivantes :

   arrêter ou stopper, au niveau du système d'entraînement (110), le tracteur (100) à une position intermédiaire ($P_M$) avant d'atteindre la position finale ($P_F$), la position intermédiaire ($P_M$) étant plus proche de la position finale ($P_F$) que la position initiale ($P_I$) ;
   modifier, au niveau du système d'entraînement (110), une ou plusieurs suspensions de tracteur associées au tracteur (100) afin d'aligner un attelage de tracteur (160) avec un attelage de remorque (210) ;
   suivre de manière autonome, au niveau du système d'entraînement (110), la trajectoire du tracteur depuis la position intermédiaire ($P_M$) jusqu'à la position finale (PF) ; et

connecter, au niveau du système d'entraînement (110), l'attelage du tracteur (160) avec l'attelage de la remorque (210).

6. Procédé selon la revendication 1, dans lequel la connexion d'un attelage de tracteur (160) avec un attelage de remorque (210) comprend de modifier les une ou plusieurs suspensions du tracteur associées au tracteur (100) pour aligner l'attelage du tracteur (160) avec l'attelage de la remorque (210).

7. Système de conduite autonome d'un tracteur (100) dans une direction vers l'arrière (R) vers un point d'intérêt, le système comprenant :

   un matériel de traitement de données (152) en communication ; et
   un matériel de mémoire en communication avec le matériel de traitement de données (152), le matériel de mémoire stockant des instructions qui, lorsqu'elles sont exécutées sur le matériel de traitement de données (152), amènent le matériel de traitement de données (152) à réaliser des opérations comprenant :

      recevoir une ou plusieurs images provenant d'une caméra (410) placée sur une partie arrière du tracteur (100) et en communication avec le matériel de traitement de données (152) ;
      afficher, sur une interface utilisateur (140), les une ou plusieurs images ;
      recevoir une trajectoire planifiée par l'opérateur depuis l'interface utilisateur (140) en communication avec le matériel de traitement de données (152), la trajectoire planifiée par l'opérateur comprenant une pluralité de points de cheminement (168) ;
      transmettre à un système d'entraînement (110) en communication avec le matériel de traitement de données (152), une ou plusieurs commandes permettant au tracteur (100) de manoeuvrer de manière autonome le long de la trajectoire planifiée par l'opérateur ;
      déterminer la position courante du tracteur ;
      déterminer une position ultérieure estimée du tracteur sur la base de la trajectoire planifiée par l'opérateur, la position ultérieure estimée du tracteur se situant à un point de cheminement ultérieur (Pb) sur la trajectoire planifiée par l'opérateur à partir de la position courante du tracteur ;
      déterminer un ajustement de trajectoire entre la position courante du tracteur et la position ultérieure estimée du tracteur ; et
      transmettre au système d'entraînement (110) des instructions permettant au tracteur (100) de manoeuvrer de manière autonome vers la position ultérieure estimée du tracteur sur la base de l'ajustement de la trajectoire,
      où les opérations comprennent en outre les étapes suivantes :

         superposer une trajectoire sur les une ou plusieurs images ; et
         recevoir une commande par l'intermédiaire de l'interface utilisateur (140) en communication avec le matériel de traitement de données (152), la commande comprenant des instructions pour ajuster la trajectoire superposée en tant que trajectoire planifiée par l'opérateur.

8. Système selon la revendication 7, dans lequel la commande comprend des instructions pour ajuster une distance de la trajectoire.

9. Système selon la revendication 7, dans lequel la commande comprend des instructions pour ajuster un angle de la trajectoire.

10. Système selon la revendication 7, dans lequel la commande comprend des instructions pour ajuster un angle d'une partie terminale de la trajectoire.

11. Système selon la revendication 7, dans lequel la détermination de la position courante du tracteur comprend les étapes suivantes :

   recevoir les données du capteur de codeur de roue associé à une ou plusieurs roues (112) ;
   recevoir des données du capteur d'angle de braquage ; et
   dans lequel la position courante du tracteur est basée sur les données du capteur de codeur de roue et les données du capteur d'angle de braquage.

FIG. 1

FIG. 2

EP 3 853 047 B1

FIG. 3A

FIG. 3B

FIG.4A

FIG.4B

FIG.4C

FIG. 5A

FIG. 5B

FIG. 5C

FIG. 5D

FIG. 6A

FIG. 6B

FIG. 7B

FIG. 7A

FIG. 8A

FIG. 8B

EP 3 853 047 B1

FIG. 9A

FIG. 9B

FIG. 10A

FIG. 10B

TRAJECTORY GENERATION

FIG. 11A

ARC AND BI-ARC END
AT THE SAME PLACE

BI-ARC APPROACH
ANGLE IS ADJUSTABLE
WITH KNOB

FIG. 11B

STEERING WHEEL
MEASUREMENT GREATLY
IMPROVES ROTATIONAL
SPEED ESTIMATE

ESTIMATED AND SIMULATED
ANGULAR SPEEDS

WHEEL TICKS
ALONE

ANGULAR
SPEED
(RAD/S)

— ESTIMATED
---- SIMULATED

TIME(S)

ESTIMATED AND SIMULATED
ANGULAR SPEEDS

WHEEL TICKS AND
STEER ANGLE

ANGULAR
SPEED
(RAD/S)

— ESTIMATED
---- SIMULATED

MOTION
ESTIMATION

TIME(S)

FIG. 11C

MOTION
ESTIMATION

FIG. 11D

PATH TRACKING

FIG. 12A

FIG. 12B

900

902 — RECEIVING, AT DATA PROCESSING HARDWARE, ONE OR MORE IMAGES FROM A CAMERA POSITIONED ON A BACK PORTION OF THE VEHICLE AND IN COMMUNICATION WITH THE DATA PROCESSING HARDWARE

904 — RECEIVING, AT THE DATA PROCESSING HARDWARE, A DRIVER PLANNED PATH FROM A USER INTERFACE IN COMMUNICATION WITH THE DATA PROCESSING HARDWARE

906 — TRANSMITTING, FROM THE DATA PROCESSING HARDWARE TO A DRIVE SYSTEM IN COMMUNICATION WITH THE DATA PROCESSING HARDWARE, ONE OR MORE COMMANDS CAUSING THE VEHICLE TO AUTONOMOUSLY MANEUVER ALONG THE DRIVER PLANNED PATH

908 — DETERMINING, AT THE DATA PROCESSING HARDWARE, A CURRENT VEHICLE POSITION

910 — DETERMINING, AT THE DATA PROCESSING HARDWARE, AN ESTIMATED SUBSEQUENT VEHICLE POSITION BASED ON THE DRIVER PLANNED PATH

912 — DETERMINING, AT THE DATA PROCESSING HARDWARE, A PATH ADJUSTMENT FROM THE CURRENT VEHICLE POSITION TO THE ESTIMATED SUBSEQUENT VEHICLE POSITION

914 — TRANSMITTING, FROM THE DATA PROCESSING HARDWARE TO THE DRIVE SYSTEM, INSTRUCTIONS CAUSING THE VEHICLE TO AUTONOMOUSLY MANEUVER TOWARDS THE ESTIMATED SUBSEQUENT VEHICLE POSITION BASED ON THE PATH ADJUSTMENT

FIG. 13

1000

1002 — RECEIVING, AT DATA PROCESSING HARDWARE, ONE OR MORE IMAGES FROM ONE OR MORE CAMERAS POSITIONED ON A BACK PORTION OF THE VEHICLE AND IN COMMUNICATION WITH DATA PROCESSING HARDWARE

1004 — RECEIVING, AT THE DATA PROCESSING HARDWARE, A DRIVER PLANNED PATH FROM A USER INTERFACE IN COMMUNICATION WITH THE DATA PROCESSING HARDWARE

1006 — TRANSMITTING, FROM THE DATA PROCESSING HARDWARE TO A DRIVE SYSTEM IN COMMUNICATION WITH THE DATA PROCESSING HARDWARE, ONE OR MORE COMMANDS CAUSING THE VEHICLE TO AUTONOMOUSLY MANEUVER ALONG THE DRIVER PLANNED PATH

1008 — DETERMINING, AT THE DATA PROCESSING HARDWARE, AN ESTIMATED VEHICLE POSITION BASED ON THE DRIVER PLANNED PATH

1010 — DETERMINING, AT THE DATA PROCESSING HARDWARE, A CURRENT VEHICLE POSITION

1012 — DETERMINING, AT THE DATA PROCESSING HARDWARE, AN ERROR BASED ON THE ESTIMATED VEHICLE POSITION AND THE CURRENT VEHICLE POSITION

1014 — DETERMINING, AT THE DATA PROCESSING HARDWARE, ONE OR MORE PATH ADJUSTMENT COMMANDS CAUSING THE VEHICLE TO AUTONOMOUSLY MANEUVER FROM THE CURRENT VEHICLE POSITION TO THE ESTIMATED VEHICLE POSITION ELIMINATING THE ERROR

1016 — TRANSMITTING, FROM THE DATA PROCESSING HARDWARE TO THE DRIVE SYSTEM, THE ONE OR MORE PATH ADJUSTMENTS

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20181251153 A1
- US 20181215382 A1
- EP 3081405 A2
- US 2019092109 A1